# EUROPÄISCHE PATENTSCHRIFT

(11) **EP 3 571 745 B1**
(45) Veröffentlichungstag und Bekanntmachung des Hinweises auf die Patenterteilung: **05.03.2025**
(21) Anmeldenummer: 18704414.4
(22) Anmeldetag: 19.01.2018
(51) Int. Cl.: H01S 3/06, H01S 3/0805, H01S 3/16, H01S 3/17

(54) **LASERMEDIUM FÜR FESTKÖRPER-LASER**
LASER MEDIUM FOR A SOLID-STATE LASER
MILIEU LASER POUR LASER À CORPS SOLIDE

(30) Priorität: 19.01.2017 DE 102017101004
(43) Veröffentlichungstag der Anmeldung: 27.11.2019
(73) Patentinhaber: SCHOTT AG, 55122 Mainz (DE)
(72) Erfinder: APITZ, Dirk, 1012 Lausanne (CH)
(74) Vertreter: Blumbach · Zinngrebe Patentanwälte PartG mbB
(86) Internationale Anmeldenummer: PCT/EP2018/051300
(87) Internationale Veröffentlichungsnummer: WO 2018/134350

(56) Entgegenhaltungen:
- US-A- 4 105 956
- US-A- 5 852 626
- US-A1- 2003 161 375
- US-B2- 9 209 590

## Beschreibung

Die Erfindung betrifft das Gebiet der Festkörper-Lasermedien zur Erzeugung von Laserlicht durch stimulierte Emission von Photonen.

Festkörper-Lasermedien, häufig in der Form von Laserstäben, kommen als lichtverstärkende Bauteile in Festkörper-Lasern zum Einsatz. Ein Festkörper-Laser ist in der Regel derart aufgebaut, dass ein Laserstab in einem optischen Resonator angeordnet ist und mit sog. Pumplicht bestrahlt wird, um höhere Energieniveaus anzuregen. Der Resonator dient dabei zur Rückkopplung von Photonen, welche beim Übergang der höheren Energieniveaus in tiefere Niveaus emittiert werden, so dass diese den Laserstab mehrfach durchlaufen können und die Wahrscheinlichkeit für das Auftreten von induzierter, d.h. stimulierter Emission erhöht wird.

Ein Laser-Resonator kann beispielsweise mit zwei einander gegenüberstehenden Spiegeln realisiert werden, wobei einer der Spiegel eine Reflektivität von nahezu hundert Prozent aufweist (Endspiegel) und der andere eine geringere Reflektivität hat, um einen Teil des Laserlichts aus dem Resonator als gebündelten Laserstrahl austreten zu lassen (Auskoppelspiegel).

Meist durchläuft das Laserlicht zudem eine Apertur bzw. ist durch eine Aperturblende begrenzt, um, je nach Anwendung, bestimmte Strahleigenschaften zu bewirken, insbesondere die Ausbildung gewünschter Strahldurchmesser, Strahldivergenzen oder Strahlprofile zu unterstützen und parasitäre Oszillationen zu unterdrücken.

Eine Aperturblende kann beispielsweise als weiteres Bauteil im Strahlengang vor dem Auskoppelspiegel angeordnet sein. Mittels einer solchen Aperturblende kann das aus dem Lasermedium austretende Laserlicht sehr flexibel selektiert werden, insbesondere durch Wahl der Aperturform und durch die Positionierung der Aperturblende relativ zu dem Lasermedium. Mitunter kann sogar ein lateraler Versatz der Apertur gegenüber dem Lasermedium erwünscht sein, um Licht entsprechend der Pumpenergiedichte im Lasermedium zu selektieren. Dies hängt damit zusammen, dass die Energiedichte im Lasermedium in den meisten Fällen nicht homogen und oft nicht einmal rotations- oder spiegelsymmetrisch ist.

Andererseits ist es auch möglich, auf Aperturblenden als separate Bauteile zu verzichten.

Aperturblenden bzw. Aperturen können dann insbesondere durch die geometrische Begrenzung bereits vorhandener Bauteile definiert sein, in manchen Fällen z.B. schon durch den Durchmesser eines Laserstabs selbst. Dies hat eine Reihe an Vorteilen, zum Beispiel, dass zusätzliche Bauteile und Kosten eingespart werden, dass die Montage eines Festkörper-Lasers erleichtert wird, eine kompaktere Bauweise ermöglicht wird, und dass die gewünschten Strahleigenschaften bereits im Rahmen der Fertigung des Lasermediums definiert beeinflusst werden können.

Nachteilig am Verzicht auf separate Aperturblenden ist jedoch typischerweise, dass die zuvor beschriebene flexible Selektion gewünschter Lichtanteile stark eingeschränkt ist. Ursächlich dafür ist, dass die Geometrie eines Lasermediums wesentlich stärker als die einer separaten Aperturblende auch von anderen Erwägungen als allein der Lichtselektion abhängt. So soll die Geometrie der Laserstäbe z.B. auch optimale Eintrittsflächen für Pumplicht aufweisen, eine möglichst günstige Fertigung, hohe Stabilität und einen einfachen und sicheren Einbau gewährleisten.

Die Druckschrift EP 1 341 271 A1 beschäftigt sich mit einer Laservorrichtung mit einem Laserstab auf der Basis von Nd:YAG . Die verwendeten Laserstäbe weisen dabei vergleichsweise große Dimensionen auf, beispielsweise einen Durchmesser von 6 mm oder mehr. Besonders kleine Lasermedien sind damit nicht realisierbar.

Auch die Druckschrift DE 102 22 852 A1 diskutiert verschiedene Strukturen einer optischen Vorrichtung mit einem optischen Bauteil, bei dem Streulicht gesperrt werden soll. Vorgeschlagen wird ein längliches optisches Bauteil, welches auf der Mantelfläche eine Kerbe aufzuweisen scheint.

Ferner offenbart die Druckschrift US 9 209 590 B2 ein Lasermedium, wobei das Lasermedium als ein Festkörper ausgebildet ist und wobei das Lasermedium eine Lichtaustrittsfläche umfasst, wobei die Lichtaustrittsfläche eine Begrenzung aufweist, welche durch zumindest eine Fase definiert ist, wobei das Lasermedium ein Wirtsmaterial und darin eingebettetes laseraktives Material umfasst, wobei das Wirtsmaterial aus der Gruppe der Phosphatgläser ausgewählt ist und wobei das Lasermedium eine Querschnittsfläche senkrecht zu der Längsachse aufweist.

Es wäre demnach wünschenswert, die oben genannten Faktoren optimal bei der Wahl der Geometrie der Laserstäbe berücksichtigen zu können, zugleich aber auf separate Aperturblenden verzichten zu können und trotzdem eine sehr flexible Selektion gewünschter Lichtanteile zu ermöglichen. Dies kann als eine Aufgabe der Erfindung gesehen werden.

Eine Aufgabe der Erfindung ist es demnach, Lasermedien, insbesondere Laserstäbe bereitzustellen, welche bereits durch ihre Geometrie eine bestimmte Apertur und Aperturblende zum Herbeiführen gewünschter Strahleigenschaften definieren, wobei zugleich eine besonders hohe Flexibilität bei der Lichtselektion gewährleistet ist, insbesondere auch in Bezug auf die Energiedichte im Lasermedium, und wobei außerdem die Geometrie der Lasermedien optimal im Hinblick auf Pumplichtflächen, Stabilität und Montage wählbar ist.

Ein weiterer, wichtiger Aspekt der Aufgabe der Erfindung ist darin zu sehen, für das Lasermedium ein Material anzugeben, welches zum einen hervorragende optische Eigenschaften aufweist, zum anderen aber auch eine kostengünstige Herstellung ermöglicht. Hierbei soll es insbesondere auch möglich sein, besonders kleine Dimensionen des Lasermediums vorzusehen und beispielsweise Laserstäbe mit einem Durchmesser von weniger als 6 mm zu herzustellen.

Ein Aspekt der Aufgabe ist demnach insbesondere, Lasermedien bereitzustellen, welche in Festkörper-Lasern eingesetzt werden können, ohne dass Aperturblenden als separate Bauteile erforderlich sind.

Die Aufgabe wird durch die Gegenstände der unabhängigen Patentansprüche gelöst. Vorteilhafte Ausführungsformen sind Gegenstände der abhängigen Ansprüche.

Erfindungsgemäß wird ein Lasermedium zur Erzeugung von Laserlicht bereitgestellt, wobei das Lasermedium als ein Festkörper ausgebildet ist und wobei das Lasermedium eine Lichtaustrittsfläche umfasst durch welche das Laserlicht im Laserbetrieb aus dem Lasermedium austritt, wobei die Lichtaustrittsfläche eine Begrenzung aufweist, welche durch zumindest eine Fase oder Rille definiert ist.

Das Lasermedium, welches insbesondere als Laserstab ausgebildet ist, weist demnach zumindest eine, vorzugsweise lediglich eine Lichtaustrittsfläche auf, welche am Rand in eine Fase oder eine als Falz ausgebildete Rille übergehen kann

Bei einer Fase ist der Übergang von der Lichtaustrittsfläche zu der angrenzenden Fasenfläche insbesondere als stumpfer Winkel ausgebildet. Die Fasenfläche weist dann wiederum insbesondere einen stumpfwinkligen Übergang zu einer Seitenfläche des Lasermediums auf.

Der (stumpfe) Winkel zwischen der Lichtaustrittsfläche und der Fasenfläche oder der Fasenfläche und z.B. einer Seitenfläche ist vorstehend zu verstehen als der innerhalb des Lasermediums liegende Winkel. Dieser Winkel beträgt vorzugsweise mindestens 100 Grad, besonders bevorzugt mindestens 120 Grad und noch bevorzugter mindestens 130 Grad und/oder vorzugsweise höchstens 170 Grad, besonders bevorzugt mindestens 120 Grad und höchstens 150 Grad und noch bevorzugter mindestens 130 Grad und höchstens 140 Grad. Der Winkel liegt beispielsweise im Bereich von mindestens 100 Grad und höchstens 170 Grad, besonders bevorzugt mindestens 120 Grad und höchstens 150 Grad und noch bevorzugter mindestens 130 Grad und höchstens 140 Grad.

Mitunter wird zur Beschreibung einer Fase auch der (spitze) Supplementwinkel zu vorstehend bezeichnetem Winkel, d.h. der Ergänzungswinkel zu 180 Grad, genutzt. Die Fase weist in dieser Beschreibung demnach vorzugsweise einen Winkel von mindestens 10 Grad, besonders bevorzugt mindestens 30 Grad und noch bevorzugter von mindestens 40 Grad und/oder höchstens 80 Grad, besonders bevorzugt höchstens 60 Grad und noch bevorzugter höchstens 60 Grad auf. Beispielsweise liegt der Winkel im Bereich von 10 bis 80 Grad, besonders bevorzugt im Bereich von 30 bis 60 Grad und noch bevorzugter im Bereich von 40 bis 60 Grad.

Mit anderen Worten wird die Lichtaustrittsfläche durch eine Fase oder eine Rille begrenzt.

Es kann also vorgesehen sein, dass zumindest eine die Lichtaustrittsfläche begrenzende Kante keinen unmittelbaren Übergang zu einer Mantelfläche des Lasermediums bildet. Vielmehr bilden vorzugsweise zumindest zwei aufeinander folgende Kanten erst den Übergang zur Seiten- oder Mantelfläche. Der Begriff der Rille umfasst dabei insbesondere einen Falz. Ferner soll der Begriff der Fase soll auch eine Hohlkehle oder eine Abrundung, etc. einschließen. Eine Fase mit ebener und schräg zur Lichtaustrittsfläche und/oder Seiten- bzw. Mantelfläche verlaufender Fasenfläche ist allerdings insbesondere aus Fertigungsgründen bevorzugt.

Je nach Form der Lichtaustrittsfläche, z.B. viereckig, können auch mehrere Fasenflächen vorgesehen sein, z.B. jeweils eine für jede der vier Viereckseiten bzw. Kanten der Lichtaustrittsfläche, oder aber, z.B. bei runder Lichtaustrittsfläche, eine vollständig umlaufende Fasenfläche.

Es ist demnach vorgesehen, dass die Lichtaustrittsfläche eine Begrenzung aufweist, welche durch die zumindest eine Fase oder Rille definiert ist. Die Lichtaustrittsfläche kann demnach allseitig durch eine Fase oder Rille begrenzt sein. Die Lichtaustrittsfläche ist dann z.B. ringsum durch eine Kante mit einem stumpfen Winkel begrenzt.

Dass die Lichtaustrittsfläche erfindungsgemäß eine Begrenzung aufweist, welche durch zumindest eine Fase oder Rille definiert ist, setzt jedoch nicht notwendig voraus, dass die Begrenzung der Lichtaustrittsfläche an die Fase oder an die Rille angrenzt. So kann z.B. (anstelle einer als Falz ausgebildeten Rille) eine als Nut ausgebildete Rille vorgesehen sein, deren Projektion entlang der optischen Achse die Begrenzung der Lichtaustrittsfläche definiert. Mit anderen Worten ist es nicht notwendig, dass die Begrenzung der Lichtaustrittsfläche durch eine Kante gebildet ist. Die Lichtaustrittsfläche kann demnach z.B. auch eine Teilfläche der Stirnfläche des Lasermediums sein, deren Begrenzung insbesondere durch eine entlang der optischen Achse entfernten Fase oder Rille definiert ist. Aus Fertigungsgründen ist eine an die Lichtaustrittsfläche angrenzende Fase oder Rille allerdings bevorzugt.

Natürlich kann die Begrenzung, d.h. der Rand der Lichtaustrittsfläche auch durch sowohl zumindest eine Fase als auch zumindest eine Rille, d.h. allgemein durch eine oder mehrere Fasen und/oder Rillen definiert sein.

Dadurch, dass die Lichtaustrittsfläche erfindungsgemäß eine Begrenzung aufweist, welche durch zumindest eine Fase oder Rille definiert ist, kann in vorteilhafter Weise nahezu jede beliebige Form für die Lichtaustrittsfläche erzielt werden. Es kann z.B. ein Laserstab mit quadratischer Querschnittsfläche nach Anbringen der zumindest einen Fase oder Rille eine nicht-quadratische, z.B. eine rechteckige, eine runde, oder aber eine lateral versetzte ggf. auch quadratische Lichtaustrittsfläche aufweisen. Die Laserflächen können so beliebige Formen aufweisen. Es wird demnach in überraschend einfacher Weise eine hohe Flexibilität hinsichtlich der Form der Lichtaustrittsfläche ermöglicht.

Gleichzeitig ist die Geometrie des Lasermediums im Wesentlichen unabhängig von der Form der Lichtaustrittsfläche wählbar. Es kann z.B. ein Laserstab mit quadratischem Querschnitt und runder Lichtaustrittsfläche oder aber ein Laserstab mit rundem Querschnitt und eckiger Lichtaustrittsfläche auf einfache Weise hergestellt werden. Die Geometrie des Lasermediums ist somit insbesondere mit Blick auf weitere Erfordernisse wählbar, z.B. kann ein Design mit eckigem, typischerweise quadratischem Querschnitt gewählt werden, welches einige praktische Vorteile bieten kann, z.B. geringe Herstellkosten, einfachere und stabilere Montage mit Pumpdioden und Wärmesenken etc.

Im Laserbetrieb kann die Lichtaustrittsfläche außerdem als Apertur dienen und die zumindest eine Fase oder Rille als Aperturblende wirken, so dass ein bestimmtes Strahlprofil geformt werden kann. Die Lichtaustrittsfläche bzw. die Fase oder Rille kann somit zur Unterstützung beim Ausbilden bestimmter Strahlprofile dienen.

Die nahezu frei und unabhängig von der Geometrie des Lasermediums wählbare Form und Position der Lichtaustrittsfläche ermöglicht somit auch eine sehr flexible Selektion gewünschter Lichtanteile, in ähnlicher Weise wie bei einer separat verwendeten beliebig geformten und lateral positionierbaren Apertur. Eine separate Aperturblende (Lochblende) ist jedoch in vorteilhafter Weise gerade nicht erforderlich. Es können somit Aperturen und/oder Aperturblenden an anderer Stelle in einem Lasersystem entfallen und so das gesamte Lasersystem kleiner, kompakter und leichter werden. Ferner können Herstellkosten reduziert werden. Zudem kann bereits bei Herstellung des Laserstabs eine als Apertur dienende Lichtaustrittsfläche so erzeugt werden, dass gewünschte Strahleigenschaften erhalten werden. So kann z.B. die Strahlqualität weiter verbessert werden.

Insbesondere kann der Mittelpunkt der Lichtaustrittsfläche lateral versetzt zur optischen Achse des Laserstabs sein, so dass eine Lichtselektion in Bezug auf eine inhomogene Energiedichte im Lasermedium ermöglicht wird.

Die Erfindung ermöglicht es auch, die Fehleranfälligkeit bei der Montage von Lasern zu senken, da bereits das Lasermedium selbst optimale, z.B. per Computersimulation bestimmte, Aperturformen für bestimmte Zwecke umfassen kann. Insbesondere mit einer Fase wird weiterhin in vorteilhafter Weise die Bruchsicherheit der Lasermedien erhöht, weil z.B. ein stumpfer Winkel verhältnismäßig unempfindlich ist.

Die zumindest eine Fase oder Rille kann demnach als Aperturblende dienen, d.h. insbesondere dazu dienen, zu verhindern, dass Laserlicht den Laserstab über Fasen- oder Rillenflächen verlässt. Ferner kann Licht an der Fase oder der Rille gestreut werden. Im Resonator können somit vorzugsweise dort, wo sich die Fase oder Rille befindet keine Lasermoden parallel zur optischen Achse anschwingen.

Die zumindest eine Fase oder Rille kann ferner dazu dienen, das Modenprofil im Laserbetrieb in definierter Weise zu beeinflussen, um bestimmte Strahleigenschaften des Laserlichts herbeizuführen und/oder die Strahlqualität des Laserlichts zu verbessern.

Eine gezielte Beeinflussung des Anschwingens von Moden kann z.B. durch Computersimulationen a priori berechnet werden und bei der Formgebung der Fase oder Rille berücksichtigt werden.

In einer bevorzugten Ausführungsform der Erfindung weist das Lasermedium eine Längsachse auf und ist insbesondere ausgebildet als ein Laserstab mit einer die Lichtaustrittsfläche umfassenden ersten Stirnfläche, einer der ersten Stirnfläche gegenüberliegenden zweiten Stirnfläche und einer Mantelfläche.

Vorzugsweise bildet die erste Stirnfläche die Lichtaustrittsfläche. Das Lasermedium kann demnach insbesondere die Form eines angefasten Quaders, Zylinders, Pyramidenstumpfes oder Kegelstumpfes aufweisen.

Es kann vorgesehen sein, dass die zweite Stirnfläche des Laserstabs keine Fasen oder Rillen aufweist oder dass diese Stirnfläche ebenfalls zumindest eine Fase oder Rille aufweist. Zumindest eine Fase oder Rille, welche insbesondere als Apertur wirkt, kann demnach auf nur einer Laserfläche angebracht sein oder auf beiden. Eine der Lichtaustrittsfläche optisch gegenüberliegende Fläche kann unabhängig von der oder den Fasen oder Rillen, welche die Begrenzung der Lichtaustrittsfläche definieren, mit Fasen versehen sein. Es kann aber auch vorgesehen sein, dass eine oder mehrere Fasen oder Rillen an der zweiten Stirnfläche eine Begrenzung der Lichtaustrittsfläche definieren. Eine oder mehrere Fasen oder Rillen, welche die zweite Stirnfläche begrenzen können insbesondere anders geformt sein, als zumindest eine Fase oder Rille an der Lichtaustrittsfläche. Dies kann z.B. von Vorteil sein, um eine geeignete Asymmetrierung zur Beeinflussung des Modenprofils und/oder der Energiedichte zu bewirken. Zumindest eine Fase an einer der Lichtaustrittsfläche optisch gegenüberliegenden Fläche des Lasermediums kann demnach als Sicherheitsfase, insbesondere zur Erhöhung der Bruchsicherheit dienen, kann aber auch optische Funktionen erfüllen.

Besonders bevorzugt ist das Lasermedium durch eine über einen Großteil der Länge des Lasermediums gleichbleibende, insbesondere polygonale, vorzugsweise quadratische, oder runde, vorzugsweise kreisförmige, Querschnittsfläche senkrecht zu der Längsachse des Lasermediums gekennzeichnet.

Das Lasermedium hat demnach vorzugsweise über einen Großteil seiner Länge einen Querschnitt, der sich durch eine Parallelverschiebung, z.B. eines Quadrats oder eines Kreises, ergibt. Das Lasermedium kann besonders bevorzugt als ein Quader mit quadratischem Querschnitt ausgebildet sein, welcher auf der Seite der Lichtaustrittsfläche angefast ist. In diesem Fall ist ein Teil der Seiten- oder Mantelfläche eben und kann besonders praktisch mit einer Pumplichtquelle oder einer Wärmesenke in Kontakt gebracht werden.

Die Lichtaustrittsfläche ist demnach insbesondere kleiner als eine Querschnittsfläche senkrecht zu der Längsachse des Lasermediums.

Die Lichtaustrittsfläche kann ferner gegenüber einer Querschnittsfläche senkrecht zu der Längsachse des Lasermediums lateral versetzt sein.

Auf diese Weise kann z.B. Laserlicht aus dem Lasermedium in Abhängigkeit von einer asymmetrischen Energiedichte ausgekoppelt werden. Eine asymmetrische Energiedichte im Lasermedium ist sogar ein typischer Fall, da die Stäbe typischerweise durch die Seiten- bzw. Mantelfläche gepumpt werden. Da das Material das Pumplicht absorbiert und damit abschwächt, ist die Energiedichte in den Stäben typischerweise nicht homogen. In den meisten Fällen ist die Energiedichte nicht einmal rotations- oder spiegelsymmetrisch, selbst wenn das transmittierte Pumplicht an der gegenüberliegenden Seite, z.B. mittels einer Verspiegelung, wieder reflektiert wird und ein zweites Mal die Möglichkeit bekommt, absorbiert zu werden.

Es kann demnach z.B. durch eine Asymmetrierung der Lichtaustrittsfläche vorgesehen sein, Laserlicht lediglich aus Bereichen des Lasermediums mit (annähernd) homogener Energiedichte auszukoppeln.

Bei homogener Energiedichte im Material können sich im Resonator, je nach statistischer Anzahl der Reflexionen, im Laserresonator Strahlprofile ausbilden, die Gauss-förmig, zylindrisch oder Mischformen, die unterschiedlich stark kollimiert sind, sind. Bestimmte Strahlprofile können in bestimmten Anwendungen vorteilhaft sein.

Die Lichtaustrittsfläche kann ferner, insbesondere für polygonale Formen, gegenüber einer Querschnittsfläche senkrecht zu der Längsachse des Lasermediums geometrisch nicht ähnlich sein und/oder eine andere, insbesondere kleinere Anzahl an Ecken, insbesondere bei nicht-rundem Querschnitt aufweisen. Mit anderen Worten kann vorgesehen sein, dass die Form der Lichtaustrittsfläche und eine Querschnittsfläche des Lasermediums nicht durch eine Ähnlichkeitsabbildung ineinander überführbar sind. Dies ist z.B. dann der Fall, wenn der Laserstab einen rechteckigen Querschnitt aufweist und die Lichtaustrittsfläche quadratisch oder rund ist.

Eine Lichtaustrittsfläche, welche geometrisch nicht ähnlich ist gegenüber der Querschnittsfläche senkrecht zu der Längsachse des Lasermediums in einem Bereich, welcher nicht der Lichtaustrittsfläche entspricht, kann daher selbstverständlich auch im Fall von Laserstäben mit rotationssymmetrischem Querschnitt oder von Laserstäben mit quaderförmiger Geometrie gegeben sein.

In einer Ausführungsform der Erfindung ist die Lichtaustrittsfläche rund und weist eine Begrenzung auf, welche durch eine umlaufende Fase oder Rille definiert ist. Eine runde Lichtaustrittsfläche kann demnach insbesondere durch eine umlaufende Fase oder Rille begrenzt sein. Unter rund wird hier allgemein verstanden, dass die Lichtaustrittsfläche keine Ecken aufweist.

Ferner kann die Lichtaustrittsfläche auch polygonal, insbesondere rechteckig, sein und Begrenzungen aufweisen, welche durch mehrere, insbesondere drei oder vier Fasen oder Rillen definiert sind. Eine polygonale, insbesondere rechteckige, Lichtaustrittsfläche kann demnach auch durch mehrere, insbesondere drei oder vier Fasen oder Rillen begrenzt sein. Die Lichtaustrittsfläche kann demnach insbesondere rechteckig sein, wobei die Höhe und Breite des Rechtecks unterschiedlich sind.

Die Lichtaustrittsfläche kann insbesondere kreisförmig oder elliptisch sein und durch eine kegelförmige Fase begrenzt sein. Unter einer kegelförmigen Fase wird verstanden, dass die Fase beschrieben ist durch eine Oberfläche auf einem Kegel. Die Achse des Kegels kann dabei insbesondere parallel zur Längsachse des Lasermediums verlaufen, insbesondere bei einer kreisförmigen Lichtaustrittsfläche, oder aber schräg zur Längsachse des Lasermediums verlaufen, insbesondere bei einer elliptischen Lichtaustrittsfläche. Eine derartige Fase kann demnach mitunter auch als eine konische Fase bezeichnet werden. Die Fase kann auch durch einen elliptischen Kegel beschrieben sein.

In einer bevorzugten Ausführungsform der Erfindung ist die Lichtaustrittsfläche eben und insbesondere senkrecht zu der Längsachse des Lasermediums und/oder parallel zu der zweiten Stirnfläche des Laserstabs ausgerichtet.

Das Lasermedium bzw. der Laserstab umfasst ein Wirtsmaterial und darin eingebettetes laseraktives Material zur stimulierten Emission von Photonen, wobei das Wirtsmaterial Phosphatgläser umfasst und das laseraktive Material z.B. Ytterbium-Ionen und/oder Erbium-Ionen (z.B. in den von der SCHOTT AG hergestellten Gläsern LG960, LG950 und LG940), Neodym-Ionen (z.B. Nd:YAG, SCHOTT Gläser APG1, APG760, LG680, LG750, LG760, LG770), Titan-Ionen (z.B. Titan:Saphir), Chrom-Ionen und/oder Cobalt-Ionen umfasst.

Geeignete Phophatgläser weisen vorzugsweisen einen Gehalt an P₂O₅ von mindestens 50 Gew.-%, mehr bevorzugt mindestens 55 Gew.-% und oder vorzugsweise höchstens 85 Gew.-%, mehr bevorzugt höchstens 80 Gew.% auf. Weiterhin kann in den Gläsern Al₂O₃ vorzugsweise in einem Gehalt von mindestens 1 Gew.%, mehr bevorzugt mindestens 2 Gew.-% und/oder vorzugsweise höchstens 20 Gew.-% enthalten sein. Als weitere optionale Komponenten können die Phosphatgläser Fluor (vorzugsweise 0 bis 20 Gew.-%), eines oder mehrere Oxide der Alkalimetalle (Li, Na, K, in Summe vorzugsweise 0 bis 20 Gew.-%), Erdalkalimetalle (Mg, Ca, Ba, Sr, in Summe vorzugsweise 0 bis 20 Gew.-%), und Oxide der Elemente B, Zn, La, Gd, Nb, Y, Bi, Ge, und/oder Pb enthalten sein. Solche Gläser sind beispielsweise in US 2017/0217828, US 5526369, US 5032315, US 5173456 und US 4929387 beschrieben, deren Offenbarung als vollumfänglich in diese Beschreibung aufgenommen gelten soll.

Während Phosphatgläser hervorragende optische Eigenschaften für die Verwendung als aktives Lasermaterial zeigen, beispielsweise aufgrund ihrer ausgezeichneten Pump- und Emissionseigenschaften, haben thermische und mechanische Parameter sehr nachteilhafte Werte. So sind sowohl die Wärmeleitung als auch die Bruchfestigkeit ("fracture toughness") eines Laser-Kristalls, wie z. B. Nd:YAG, jeweils mehr als eine Größenordnung besser als die von Phosphatgläsern, der thermische Ausdehnung-Koeffizient durchschnittlich um etwa ein Drittel geringer als der von Phosphatgläsern, das Young-Modul durchschnittlich um einen Faktor 5-6 größer. Als Konsequenz bilden sich bei Laserbetrieb von Phosphatgläsern bei gleicher Geometrie deutlich stärkere Temperaturprofile und somit thermische Linsen aus, und ein Materialbruch aufgrund von Temperaturgradienten oder thermischem Schock ist viel wahrscheinlicher. Daher ist eine weitest mögliche Reduzierung der Größe der aktiven Laserglaskomponenten und des Wärmeleitweges vom nutzbaren Volumen zur außen angebrachten Wärmesenke notwendig.

Neben den Nachteilen der thermischen und mechanischen Eigenschaften erscheinen Phosphatgläser als Wirtsmaterial auch deshalb ungeeignet, da sie desweiteren hygroskopisch und wasserlöslich sind. Zudem sind sie leicht zerbrechlich und zerkratzbar und verfügen über eine weiche Oberfläche.

Überraschenderweise hat sich gezeigt, dass bei Phosphatgläsern als Wirtsmaterial nicht nur sehr kleine Dimensionen des Laserstabes realisiert werden können, sondern dass es bei bestimmten Anwendungen sogar aus thermischen Gründen notwendig ist, die Laserstäbe in Ihrer Größe so weit wie möglich zu reduzieren. Im Fall von zylinderförmigen Laserstäben können die Durchmesser bei weniger als 6 mm, bevorzugt weniger als 5 mm und besonders bevorzugt weniger als 4 mm, weniger als 3 mm und sogar weniger als 2 mm liegen. Es lassen sich sogar Laserstäbe mit einem Durchmesser von beispielsweise 1,5, 1,2, 1,0 oder 0,9 mm aus Phosphatglas erzeugen. Insbesondere können hierzu die mit laseraktiven Materialien dotierten Phosphatgläser LG960, LG950 und LG940 verwendet werden. Die vorstehend genannten Dimensionen des Laserstabes gelten selbstverständlich auch für andere, ähnliche Geometrien, also beispielsweise Laserstäbe mit polygonalem Querschnitt.

Da Phosphatgläser und insbesondere die Oberfläche von Komponenten aus Phosphatglas sehr sensibel gegenüber Wasser sind und kleinere Bauteile eine relativ zum Gesamtvolumen größere Oberfläche aufweisen, ging man davon aus, dass sehr kleine Laserstäbe aus Phosphatglas nicht praktikabel sind. Es hat sich überraschenderweise herausgestellt, dass mit einem schnellen Verbau in eine entsprechende Gehäusekapselung mit wenig Handhabungsvorgängen und wenigen zusätzlichen Einzelbauteilen die Herstellung und der Erhalt der Qualität des Laserstabes möglich ist. Aperturen, die bei Laserstäben mit den beschriebenen Dimensionen vorteilhaft die Strahleigenschaften verbessern sollen, müssen nun eine spezielle minimale geometrische Genauigkeit aufweisen, was Form, Querschnittsgröße und Positionierung angeht. Soll die Apertur bei Stäben der beschriebenen Größe mittels Fase oder Rille wirken, so ist es vorteilhaft, wenn die Fase oder die Rille eine Größen- und Positionsgenauigkeit von wenigstens 0,1 mm, bevorzugt wenigstens 0,05 mm, besonders bevorzugt wenigstens 0,02 mm und ganz besonders bevorzugt wenigstens 0,01 mm haben.

Dabei war es auch für den Fachmann nicht ersichtlich, dass davon auszugehen ist, dass es überhaupt möglich sein kann, an Komponenten aus derart weichem, wasserlöslichen, hygroskopischem Material mit polierten oder sogar antireflexions-beschichteten Flächen auch bei diesen sehr geringen Dimensionen des Laserstabes noch die erfindungsgemäße Fase oder Rille mit der notwendigen Präzision zu erzeugen.

Generell und ohne Beschränkung auf die vorstehend erwähnten bevorzugten Ausführungsformen kann jedoch das laseraktive Material Ytterbium-Ionen, Erbium-Ionen, Neodym-Ionen, Praesodym-Ionen, Samarium-Ionen, Europium-Ionen, Gadolinium-Ionen, Terbium-Ionen, Dysprosium-Ionen, Holmium-Ionen, Thulium-Ionen, Cer-Ionen, Chrom-Ionen, Cobalt-Ionen Vanadium-Ionen, Nickel-Ionen, Molybdän-Ionen und/oder Titan-Ionen umfassen.

Erbium-Ionen-basierte Festkörper sind insbesondere vorteilhaft, um sog. "eye-safe" Lasermedien herzustellen. Diese werden beispielsweise im medizinischen und militärischen Bereich eingesetzt. Die optisch aktiven Ionen können demnach Erbium-Ionen (Er³⁺) sein, welche z.B. in Phosphatglas eingebettet sind und bei ca. 1535 bis 1550 nm lasen. Gepumpt werden kann indirekt über Ytterbium (Yb³⁺, Dioden-gepumpt, um 950 nm) oder über Chrom (Cr³⁺) und Ytterbium (Blitzlampen-gepumpt, sichtbares und nah-infrarotes Spektrum).

Die Konzentration der Ytterbium-Ionen liegt vorzugsweise im Bereich von 5 × 10²⁰ cm⁻³ bis 30 × 10²⁰ cm⁻³, die der Erbium-Ionen im Bereich von 0,1 × 10²⁰ cm⁻³ bis 2 × 10²⁰ cm⁻³, die der Chrom-Ionen im Bereich von 0,01 × 10²⁰ cm⁻³ bis 0,2 × 10²⁰ cm⁻³ und/oder die der Neodym-Ionen im Bereich von 0,1 × 10²⁰ cm⁻³ bis 10 × 10²⁰ cm⁻³.

Es können somit z.B. Ionenkonzentrationen (Dotierungen) wie folgt vorgesehen sein:

| | | |
|---|---|---|
| - Dioden-gepumpt: | Yb³⁺: | 15 * 10²⁰ cm⁻³ |
| | Er³⁺: | 0.5 * 10²⁰ cm⁻³ |
| - oder: | Yb³⁺: | 20 * 10²⁰ cm⁻³ |
| | Er³⁺: | 0.2 * 10²⁰ cm⁻³ |
| - Blitzlampen-gepumpt: | Yb³⁺: | 23 * 10²⁰ cm⁻³ |
| | Er³⁺: | 0.2 * 10²⁰ cm⁻³ |
| | Cr³⁺: | 0.05 * 10²⁰ cm⁻³ |

In einer Ausführungsform der Erfindung kann das Lasermedium eine teilreflektive Beschichtung welche auf der Lichtaustrittsfläche, insbesondere auf der ersten Stirnfläche, aufgebracht ist, umfassen.

Eine teilreflektive Beschichtung auf der Lichtaustrittsfläche kann demnach als Auskoppelspiegel eines Resonators fungieren. Auf diese Weise kann neben der Aperturblende ein weiteres Bauteil für ein Lasersystem eingespart werden, so dass die Kosten verringert und die Montage erleichtert werden kann.

Andererseits kann auch eine hochreflektive Beschichtung (d.h. nahe 100% Reflexionsvermögen) vorgesehen sein, welche auf einer Stirnfläche, auf der Mantelfläche und/oder auf der zumindest einen Fase oder Rille (d.h. auf der oder den Fasen- oder Rillenflächen) aufgebracht ist. Eine auf einer der Lichtaustrittsfläche gegenüberliegenden Fläche des Lasermediums aufgebrachte hochreflektive Beschichtung kann insbesondere als Endspiegel eines Resonators dienen. Auch dies ermöglicht es, ein Bauteil und damit Kosten einzusparen.

Beschichtungen auf dem Lasermedium können insbesondere mit einem Atomlagenabscheide-Verfahren aufgebracht werden. Es kann somit auch vorgesehen sein, dass Laserstäbe, insbesondere kleine Laserstäbe, vollständig gekapselt sind, wobei ggf. eine Öffnung für Pumplicht vorgesehen sein kann.

Das Lasermedium weist ferner vorzugsweise mindestens eine Pumplichtfläche zum Einkoppeln von Pumplicht auf. Ein Laserstab kann z.B. durch die Seiten- bzw. Mantelfläche gepumpt werden. Mit anderen Worten kann zumindest eine Seitenfläche des Lasermediums als eine Pumplichtfläche ausgebildet sein. Es kann dabei vorgesehen sein, dass nur aus einer Richtung, d.h. von einer Seitenfläche aus, gepumpt wird, wobei auf der der Pumplichtfläche gegenüberliegenden Seitenfläche eine Verspiegelung, insbesondere eine hochreflektive Beschichtung aufgebracht sein kann, die das Pumplicht zurück in das Stabinnere reflektiert. Dadurch kann eine effizientere Energieausbeute des Pumpens gewährleistet werden.

Es kann dabei vorgesehen sein, dass der Übergang von der Lichtaustrittsfläche zu der zumindest einen als Pumplichtfläche ausgebildeten Seitenfläche durch lediglich eine Kante gebildet wird, wobei der Übergangswinkel vorzugsweise 90 Grad beträgt. Mit anderen Worten kann es je nach Lasergeometrie und Eigenschaften vorteilhaft sein, dass die Apertur-begrenzenden Fasen oder Rillen nur an den Seitenflächen (bzw. deren Kanten mit der Lichtaustrittsfläche) angebracht sind, durch die nicht gepumpt wird, während die Pump-Seitenfläche keine Fase aufweist. Die Inversionskonzentration und damit die Energiedichte ist direkt an dieser Seitenfläche am größten, so dass man diesen Volumenbereich des aktiven Lasermediums gern komplett ausnutzen möchte.

Die Pumplichtfläche kann z.B. auch lediglich durch eine Teilfläche einer Seitenfläche gebildet sein. Es kann z.B. eine Öffnung innerhalb einer Verspiegelung, insbesondere einer hochreflektiven Beschichtung, vorgesehen sein, welche die Pumplichtfläche bildet. Eine solche Öffnung kann z.B. als Schlitzöffnung ausgebildet sein. Zusammen mit einer gegenüberliegenden Verspiegelung kann die Effizienz des Pumpens nochmals erhöht werden. Zudem kann ein Aufheizen anderer Bauteile des Lasersystems verringert werden. Es können auch alle Seitenflächen mit einer solchen Verspiegelung versehen werden und nur eine Schlitzöffnung für das Pumpen offen gelassen werden.

Die Verspiegelungen, d.h. die Beschichtung kann z.B. ein dielektrisches Vielschichtsystem sein, oder auch eine Metallbeschichtung, die im entsprechenden Spektralbereich reflektiert, z.B. eine Beschichtung mit Gold, Kupfer, Silber oder Aluminium.

In einer Ausführungsform der Erfindung hat das Lasermedium eine Länge entlang der Längsachse von mindestens 1 Millimeter, vorzugsweise mindestens 5 Millimeter, und/oder höchstens 1.000 Millimeter, vorzugsweise höchstens 500 Millimeter, gemäß spezieller Ausführungsformen vorzugsweise höchstens 50 Millimeter. Das Lasermedium hat ferner eine Querschnittsfläche senkrecht zu der Längsachse von mindestens 0,25 mm² und höchstens 1.000 mm².

Die Geometrien der Laserstäbe können beispielsweise sein:
- quadratischem Querschnitt mit 1,5 x 1,5 x 20 Millimeter,
- rechteckiger Querschnitt mit 2 x 5 x 10 Millimeter,
- runder Querschnitt mit Ø 1,8 x 25 Millimeter,
wobei die Stäbe jeweils zumindest eine Fase aufweisen, die nicht nur als Aperturblende sondern auch zur Verminderung der Bruchgefahr dienen kann. Ein runder Stab kann bspw. eine runde Fase aufweisen, welche die Bruchsicherheit erhöht. Außerdem wird dadurch das Risiko von Ausbrüchen an der Kante reduziert, die potenziell sogar die Oberfläche zerkratzen können.

Für rotationssymmetrische Laserstäbe als Lasermedium ergeben sich beispielhaft die in der nachfolgenden Tabelle 1 als Variante 1 und 2 bezeichneten Ausführungsformen, welche bevorzugte und besonders bevorzugte Abmessungen auflisten. Weitere, bevorzugte Abmessungen sind mit den bevorzugten Größen 1, 2 und 3 angegeben. Mit der Bezeichnung Beispiel 1 und Beispiel 2 sind zwei besonders bevorzugte Größen für die erfindungsgemäßen Laserstäbe angegeben. Diese rotationssymmetrischen Laserstäbe gemäß der Tabelle 1, also gemäß Variante 1 oder 2, Größe 1, 2 oder 3, oder gemäß Beispiel 1 oder 2, umfassen vorzugsweise die weiter oben genannten Phosphatgläser, insbesondere die von der SCHOTT AG hergestellten Gläser LG960, LG950 und LG940.

**Tabelle 1: Bevorzugte Abmessungen für Laserstäbe mit rotationssymmetrischem Querschnitt**

| | Zylinderdurchmesser [mm] | Zylinderhöhe [mm] | Oberfläche [mm²] | Volumen [mm³] | Oberfläche pro Volumen [mm⁻¹] |
|---|---|---|---|---|---|
| Variante 1 | 4 | 60 | 779.1 | 754.0 | 1.0 |
| Variante 2 | 2.5 | 30 | 245.4 | 147.3 | 1.7 |
| Größe 1 | 1.8 | 25 | 146.5 | 63.6 | 2.3 |
| Größe 2 | 1.5 | 20 | 97.8 | 35.3 | 2.8 |
| Größe 3 | 1.2 | 11 | 43.7 | 12.4 | 3.5 |
| Beispiel 1 | 1 | 10 | 33.0 | 7.9 | 4.2 |
| Beispiel 2 | 0.7 | 5 | 11.8 | 1.9 | 6.1 |
| | | | | | |

Für quaderförmige Laserstäbe als Lasermedium ergeben sich beispielhaft die in der nachfolgenden Tabelle 2 als Variante 1 und 2 bezeichneten Ausführungsformen, welche bevorzugte und besonders bevorzugte Abmessungen auflisten. Weitere, bevorzugte Abmessungen sind mit den bevorzugten Größen 1, 2 und 3 angegeben. Mit der Bezeichnung Beispiel 1 und Beispiel 2 sind zwei besonders bevorzugte Größen für die erfindungsgemäßen Laserstäbe angegeben. Diese quaderförmigen Laserstäbe gemäß Tabelle 2, also gemäß Variante 1 oder 2, Größe 1, 2 oder 3, oder gemäß Beispiel 1 oder 2, umfassen vorzugsweise die weiter oben genannten Phosphatgläser, insbesondere die von der SCHOTT AG hergestellten Gläser LG960, LG950 und LG940.

**Tabelle 2: Bevorzugte Abmessungen für Laserstäbe mit quaderförmiger Geometrie**

| | QuaderLänge [mm] | QuaderBreite [mm] | QuaderHöhe [mm²] | Oberfläche [mm²] | Volumen [mm³] | Oberfläche pro Volumen [mm⁻¹] |
|---|---|---|---|---|---|---|
| Variante 1 | 30 | 5 | 5 | 650.0 | 750.0 | 0.9 |
| Variante 2 | 10 | 6 | 1.3 | 161.6 | 78.0 | 2.1 |
| Größe 1 | 25 | 4 | 4 | 432.0 | 400.0 | 1.1 |
| Größe 2 | 20 | 1.5 | 1.5 | 124.5 | 45.0 | 2.8 |
| Größe 3 | 10 | 6 | 1.2 | 158.4 | 72.0 | 2.2 |
| Beispiel 1 | 4 | 2 | 1 | 28.0 | 8.0 | 3.5 |
| Beispiel 2 | 3 | 0.7 | 0.7 | 9.4 | 1.5 | 6.4 |

Für die vorliegende Erfindung spielt das Verhältnis Oberfläche zu Volumen ("A/V-Verhältnis") eine zentrale Rolle, da zum einen ein kleines Volumen des Lasermediums grundsätzlich positiv zu bewerten ist, weil es etwa vergleichsweise einfach in eine entsprechende Wärmesenke eingebracht und Wärme vom gepumpten Volumen abgeführt werden kann. Zum anderen ist aber auch eine gewisse Länge erforderlich, um die gewünschten optischen Eigenschaftes des Lasermediums in Verbindung mit dem Laserstrahl optimal nutzen zu können.

Der Wert für das A/V-Verhältnis liegt daher bei wenigstens 0,8, bevorzugt bei wenigstens 1 und besonders bevorzugt bei wenigstens 2. Zugleich sollte das AN-Verhältnis nicht größer sein als 10, bevorzugt nicht größer als 8 und besonders bevorzugt nicht größer als 7. Demnach liegt für ein erfindungsgemäßes Lasermedium mit einem Phosphatglas als Wirtsmaterial das Verhältnis von Oberfläche zu Volumen des Lasermediums in einem Bereich zwischen 0,8, und 10, bevorzugt zwischen 1 und 8 und besonders bevorzugt zwischen 2 und 7.

Bei derartig kleinen Komponenten ist die Justierung und Ausrichtung von zusätzlichen Blenden-Komponenten sehr aufwendig, so dass die erfindungsgemäße Begrenzung der Lichtaustrittsfläche mit zumindest einer Fase oder Rille sich sehr vorteilhaft auswirkt.

Die Erfindung betrifft weiterhin eine Laservorrichtung mit einem erfindungsgemäßen Lasermedium, einer Pumpquelle zum Einführen von Pumplicht in das Lasermedium und einem Resonator zur Mehrfachreflexion von Photonen, wobei der Resonator einen insbesondere durch eine teilreflektive Beschichtung gebildeten Auskoppelspiegel oder einen insbesondere durch eine hochreflektive Beschichtung gebildeten Endspiegel umfasst. Eine teil- bzw. hochreflektive Beschichtung kann auch als Verspiegelung bezeichnet werden. Es kann dabei vorgesehen sein, dass Fasen oder Rillen, welche eine Begrenzung der Lichtaustrittsfläche des Lasermediums definieren, d.h. Apertur-gebende Fasen oder Rillen, auf der verspiegelten, der nicht verspiegelten oder beiden Seiten sind.

Die Erfindung betrifft schließlich ein Verfahren zur Herstellung eines Lasermediums gemäß Anspruch 14, wobei die zumindest eine Kante insbesondere durch Abschleifen, Abpolieren und/oder abgefräst wird.

Unter dem Begriff Anfasen wird insbesondere verstanden, dass eine Kante derart bearbeitet wird, dass zwei Kanten entstehen, es sollen demnach auch das Anbringen einer Hohlkehle oder einer Abrundung etc. nicht ausgeschlossen sein. Ein solches Anfasen kann z. B. per Hand oder auch mit einer CNC-Maschine erfolgen. Ferner kann auch das Anbringen von mehr als zwei Kanten vorgesehen sein, insbesondere durch Falzen oder Nuten etc.

Bei den erfindungsgemäß sehr kleinen und weichen Komponenten kann dafür auf Schleif- oder Polierprozesse zurückgegriffen werden, die aufgrund von Polierkorn-Material und -Größe sehr wenig abrasiv sind und Material nur sehr langsam abtragen. Typischerweise werden zum Polieren von Glas Polierkörner aus Cerioxid genommen, da diese sich gut an das Glas binden und dadurch eine hohe Abtragungsrate erzielen. Dies ist beim Anbringen der Fase oder Rille nicht erwünscht. Daher eignen sich für das Verfahren zur Herstellung des Lasermediums Polierkörner besser, die weniger starke kovalente Bindungen mit dem Lasermaterial eingehen, wie z. B. Al₂O₃, SiO₂, oder Diamant. Um eine gute Präzision zu erzielen, darf dabei auch die Oberflächenrauheit der geschliffenen Fase oder Rille und somit auch die Polierkörner nicht zu groß sein. Vorteilhat entsprechen diese der Qualität Grit 400 oder besser. Dabei ist es möglich, mit ungebundenem Korn ("Slurries") oder gebundenem Korn zu arbeiten. Des Weiteren ist es vorteilhaft, beim Abtragen sehr kleiner Materialmengen mit dem Prozess nicht darauf zu zielen, im Zentrum der Größen- oder Position-Spezifikation zu liegen. Vielmehr ist Erfolg wahrscheinlicher, wenn nur so viel Material abgetragen wird, dass nahe der oberen Toleranzgrenze gearbeitet wird und auf diese Weise gegebenenfalls weiteres Material entfernen kann. Wenn bei einem solchen Materialabtragungsprozess einmal unterhalb der unteren Toleranzgrenze gearbeitet wird, so ist die Komponente nicht mehr konform, weil kein Material im Nachhinein wieder angefügt werden kann. Ferner ist es vorteilhaft, besonders bei extrem eng spezifizierten Größen der Fase in mehreren Iterationen eines Abtragungs- und Mess-Feedback-Loops zu arbeiten. Die Fasen- oder Rillengröße lässt sich mit einem Messmikroskop messen. Auf diese Weise lassen sich an Laserstäben mit einem Durchmesser von weniger als 2 mm Fasen mit einer Größengenauigkeit von weniger als 10 Mikrometer anbringen, auch diese Laserstäbe aus weichem, wassersensiblen Phosphatgläsern bestehen oder derartige Phosphatgläser umfassen.

In einer speziellen Ausführungsform wird ein Laserstab mit einem rechteckigen Querschnitt durch eine Seitenfläche optisch gepumpt. Da das Pumpen durch Absorption erfolgt, sinkt die Intensität des Pumplichts näherungsweise exponentiell mit dem Abstand von der Oberfläche, durch welche gepumpt wird. Die höchste Energiedichte ergibt sich dadurch direkt an der entsprechenden Seitenfläche. In diesem Fall wäre es von Nachteil, durch eine Fase an der Kante, die die Laseraustritts- oder -eintrittsfläche mit der Pumpfläche bildet, den Laserstrahl durch eine Fase zu beschneiden. Um die Apertur nun vorteilhaft auszubilden, wird die Fase an die oder eine der anderen drei Kanten der Laseraustritts- bzw. -eintrittsfläche angeordnet und die Kante an der Pumpfläche verbleibt ohne Fase.

In einer ähnlichen Ausführungsform und mit ähnlichem Grund können runde oder rechteckige, durch Fasen begrenzte Aperturen asymmetrisch angeordnet sein und sich näher an der Seite des Laserstabes befinden, durch die gepumpt wird.

Einige Ausführungsformen der Erfindung werden nachfolgend näher anhand von Figuren erläutert, wobei übereinstimmende Bezugszeichen gleiche oder ähnlichen Elementen zugeordnet sind. Es zeigen:
- Fig. 1:: Laservorrichtungen mit einem Laserstab, einer Pumpquelle und einem Resonator,
- Fig. 2:: Quadratischer Laserstab mit mittig platzierter rechteckiger Apertur und Fasen von 45 Grad,
- Fig. 3:: Quadratischer Laserstab mit mittig platzierter rechteckiger Apertur und Fasen unterschiedlicher Winkel,
- Fig. 4:: Quadratischer Laserstab mit mittig platzierter runder Apertur und einer kegelförmigen Fase, wobei die Symmetrieachsen des Laserstabs und der Fase identisch sind,
- Fig. 5:: Quadratischer Laserstab mit bzgl. der Mitte verschoben platzierter runder Apertur und einer kegelförmigen Fase, wobei die Symmetrieachsen des Laserstabs und der Fase parallel sind,
- Fig. 6:: Quadratischer Laserstab mit elliptischer Apertur und einer kegelförmigen Fase, wobei die Symmetrieachsen des Laserstabs und der Fase schräg zueinander verlaufen,
- Fig. 7:: Quadratischer Laserstab mit mittig platzierter elliptischer Apertur und einer Fase von 45 Grad,
- Fig. 8:: Quadratischer Laserstab mit mittig platzierter runder Apertur und als Falz ausgebildete Rille (Stufe), wobei die Symmetrieachsen des Laserstabs und der Stufe identisch sind,
- Fig. 9:: Runder Laserstab mit mittig platzierter runder Apertur und stufenförmiger Rille (Falz), wobei die Symmetrieachsen des Laserstabs und des Falz identisch sind,
- Fig. 10:: Runder Laserstab mit unzentriert angeordneter runder Apertur und stufenförmiger Rille (Falz), wobei die Symmetrieachsen von Stab und Falz parallel sind,
- Fig. 11:: Runder Laserstab mit mittig platzierter runder Apertur und stufenförmiger Rille (Falz), wobei die Symmetrieachsen von Stab und Falz identisch sind und wobei an die Mantelfläche angrenzende Kanten zusätzlich mit einer Sicherheitsfase versehen sind,
- Fig. 12:: Runder Laserstab mit mittig platzierter runder Apertur und stufenförmiger Rille (Falz), wobei die Symmetrieachsen von Stab und Falz identisch sind und wobei alle Kanten zusätzlich mit einer als Abrundung ausgebildeten Sicherheitsfase versehen sind,
- Fig. 13:: Runder Laserstab mit mittig platzierter achteckiger Apertur,
- Fig. 14:: Runder Laserstab mit mittig platzierter runder Apertur und schlitzförmiger Rille (Rundnut), wobei die Symmetrieachsen von Stab und Nut identisch sind,
- Fig. 15:: Runder Laserstab mit mittig platzierter runder Apertur und schlitzförmiger Rille (Rundnut), wobei die Symmetrieachsen von Stab und Nut identisch sind und wobei zusätzliche (nicht-aperturwirksame) Sicherheitsfasen angebracht sind,
- Fig. 16:: Quaderförmiger Laserstab mit rechteckiger Apertur und Fasen an drei der vier Seiten der Lichtaustrittsfläche, so dass diese direkt an eine der Seitenflächen grenzt,
- Fig. 17:: Quaderförmiger Laserstab mit rechteckiger Apertur und Fasen an drei der vier Seiten der Lichtaustrittsfläche, so dass diese direkt an eine der Seitenflächen grenzt und wobei diese Seitenfläche eine Pumplichtfläche ist und die anderen Seitenflächen verspiegelt sind,
- Fig. 18:: Laserstab mit bezüglich der Mitte verschoben platzierter runder Apertur und einer kegelförmigen Fase, wobei die Symmetrieachsen von Stab und Fase parallel sind und wobei die Apertur hin zu einer Längskante (Kante parallel zur Längsachse des Lasermediums) verschoben ist und wobei an diese Längskante eine Pumplicht-Eintrittsfläche poliert ist und wobei die vier Seitenflächen mit einer für Pumplicht reflektierenden Spiegelschicht beschichtet sind,
- Fig. 19:: Quadratischer Laserstab mit mittig platzierter rechteckiger Apertur und Fasen unterschiedlicher Winkel, wobei (a) die angefaste Seite des Laserstabs (teil)verspiegelt ist und die andere Seite des Laserstabs antireflexbeschichtet ist bzw. (b) die angefaste Seite des Laserstabs antireflexbeschichtet ist und die andere Seite des Laserstabs (teil)verspiegelt ist,
- Fig. 20:: Quadratischer Laserstab mit mittig platzierter rechteckiger Apertur und zwei Fasen-Paaren auf gegenüberliegenden Seiten des Laserstabs, wobei es sich um Fasen von 45 Grad handelt.

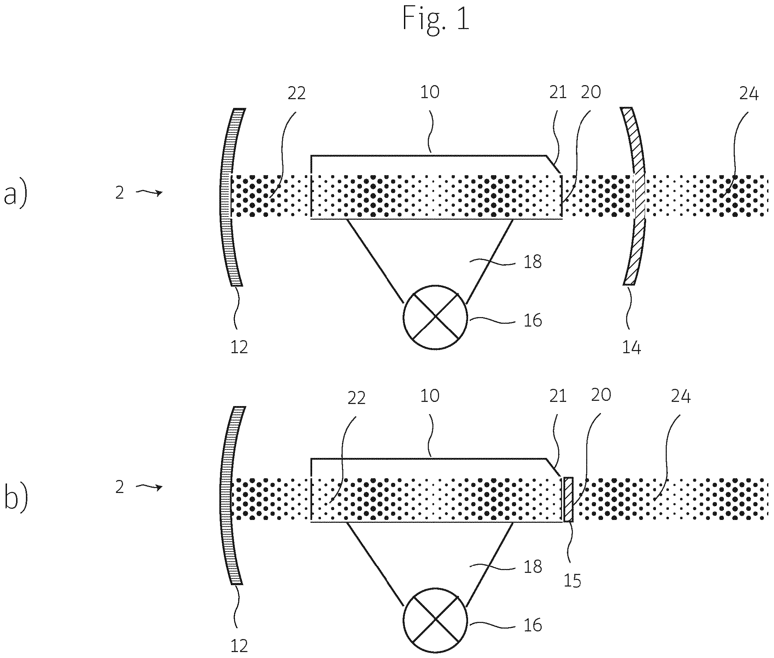

Bezugnehmend auf Fig. 1a umfasst eine beispielhafte und stark vereinfachte Laservorrichtung 2 ein Lasermedium 10, einen Resonator mit einem Endspiegel 12 und einem gegenüberstehenden Auskoppelspiegel 14 sowie eine Pumplichtquelle 16 zum Erzeugen von Pumplicht 18. Mit dem Pumplicht 18 kann im Lasermedium 10 Besetzungsinversion erzeugt werden.

Bei vielen Lasersystemen gibt es weitere Elemente innerhalb der Kavität, wie z.B. sättigbare Absorber als Güteschalter (engl.: Q-Switch) (z.B. aus Cobalt-Spinel) bei gepulsten Lasersystemen.

In dem in Fig. 1b gezeigten, ebenfalls stark vereinfachten Beispiel ist das Lasermedium 10 mit einer Beschichtung 15 versehen, wobei die Beschichtung 15 eine teilreflektive Beschichtung ist, um eine Auskopplung von Licht zu ermöglichen. Die teilreflektive Beschichtung und der Endspiegel 12 dienen als Resonator. Wie dem Fachmann ersichtlich ist, kann in umgekehrter Weise auch eine hochreflektive Beschichtung zusammen mit einem Endspiegel als Resonator fungieren.

Bezüglich beider Beispiele der Fig. 1a und 1b können durch induzierte Emission von Photonen durch laseraktives Material im Lasermedium und unterstützt durch Mehrfachreflexion von Photonen im Resonator Lasermoden 22 entlang der optischen Achse anschwingen.

Das Lasermedium 10 weist in den gezeigten Beispielen eine Fase 21 auf. Diese kann z.B. (wie dargestellt) verhindern, dass sich Lasermoden auch dort parallel zur optischen Achse ausbilden, wo sich die Fase 21 befindet. Andererseits kann die Fase 21 das Modenprofil und/oder die Energiedichte im Lasermedium 10, insbesondere in transversalen oder schrägen Richtungen gezielt beeinflussen (hier nicht gezeigt).

Die Fase 21 dient weiterhin insbesondere als Aperturblende, derart, dass eine räumliche Selektion von Laserlicht, insbesondere in einer Ebene senkrecht zur optischen Achse, erfolgt. Die Fase 21 definiert demnach die als Apertur dienende Lichtaustrittsfläche 20, durch welche Photonen das Lasermedium verlassen können. Es wird somit ein durch die Fase 21 geformter Laserstrahl 24 erzeugt.

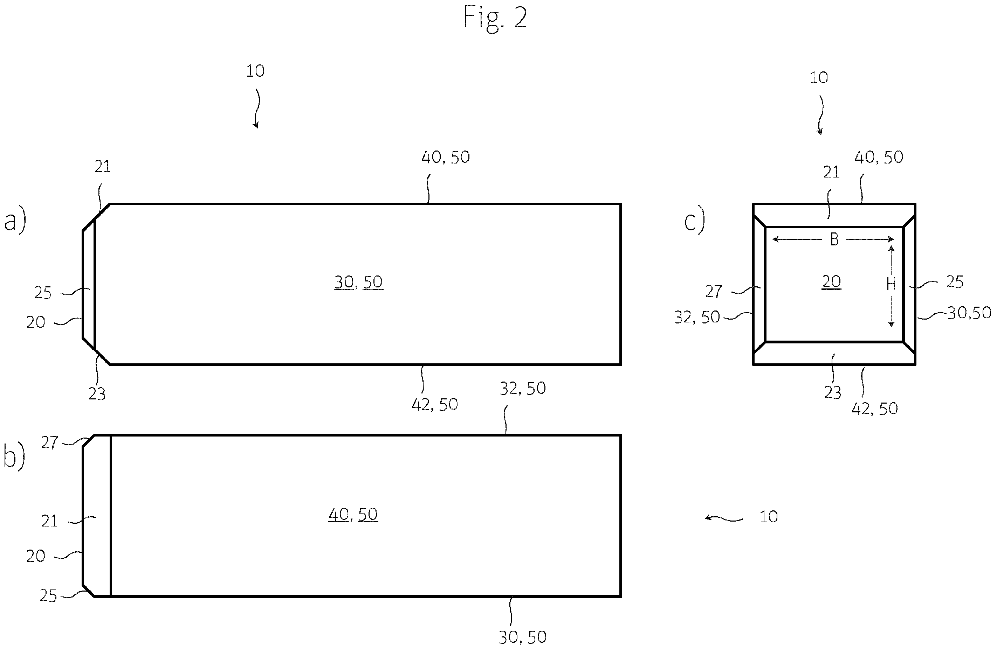

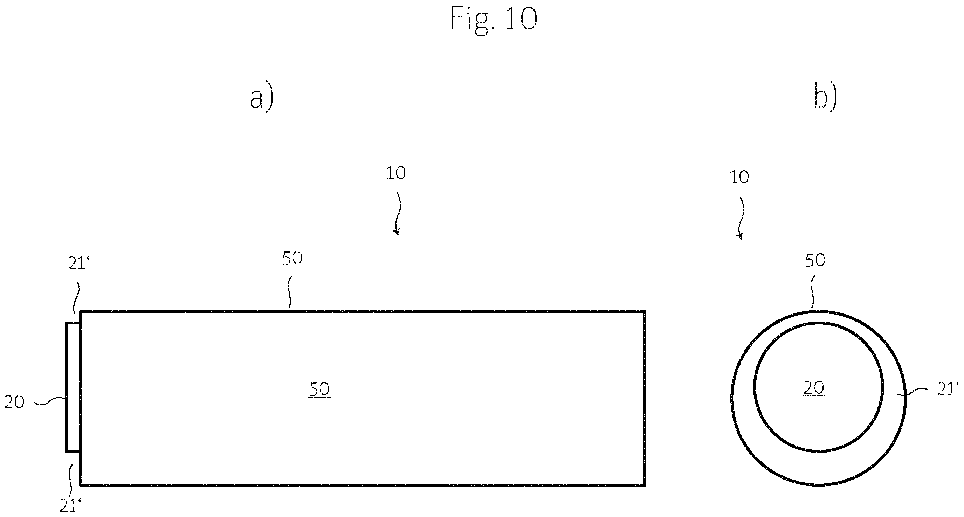

In den Fig. 2 bis 20 werden einige beispielhafte Ausführungsformen von Lasermedien mit zumindest einer Fase oder Rille beschrieben. Die gezeigten Ausführungsformen sind nicht abschließend zu verstehen.

Fig. 2 zeigt ein als Laserstab ausgebildetes Lasermedium 10 in Seitenansicht (Fig. 2a), Aufsicht (Fig. 2b) und in Vorderansicht auf die Lichtaustrittsfläche 20 (Fig. 2c).

Das Lasermedium 10 hat einen rechteckigen, hier quadratischen, Querschnitt, wie in Fig. 2c zu sehen ist. Die Lichtaustrittsfläche 20 ist allseitig von Fasen 21, 23, 25, 27 begrenzt, welche zusammengenommen als Aperturblende wirken.

Die Fasen bilden jeweils Übergänge zur Mantelfläche 50 des Lasermediums: Die Fase 27 bildet einen Übergang zur Seitenfläche 32 der Mantelfläche 50 und die Fase 25 bildet einen Übergang zur Seitenfläche 30 der Mantelfläche 50, wie auch in der Seitenansicht der Fig. 2a zu sehen ist. Analog bildet die Fase 23 einen Übergang zur Seitenfläche 42 der Mantelfläche 50 und die Fase 21 bildet einen Übergang zur Seitenfläche 40 der Mantelfläche 50, wie auch in der Aufsicht der Fig. 2b zu sehen ist.

Die als Apertur wirkende Lichtaustrittsfläche 20 ist in dem gezeigten Beispiel rechteckig ausgebildet, wobei die Breite B und die Höhe H unterschiedliche Längen aufweisen. Der Querschnitt des Lasermediums 10, welcher hier quadratisch ist, ist demnach nicht geometrisch ähnlich zur Lichtaustrittsfläche.

Die Lichtaustrittsfläche 20 ist in diesem Beispiel zentriert bezüglich der Längsachse des Lasermediums 10 angeordnet. Mit anderen Worten liegt der Mittelpunkt der Lichtaustrittsfläche 20 auf der optischen Achse. Oder anders gesagt besteht kein lateraler Versatz der Lichtaustrittsfläche 20.

Die Winkel zwischen der Lichtaustrittsfläche 20 zu den Fasenflächen 21, 23, 25, 27 können identische, insbesondere stumpfe Winkel, sein, hier betragen sie jeweils 135 Grad. Der zu 135 Grad zugehörige Supplementwinkel zu 180 Grad ist 45 Grad, daher wird auch von einer Fase mit 45 Grad gesprochen. Auch die Winkel zwischen den Fasenflächen 21, 23, 25, 27 und den angrenzenden Seitenflächen 40, 42, 30, 32 sind hier jeweils identische Winkel von 135 Grad.

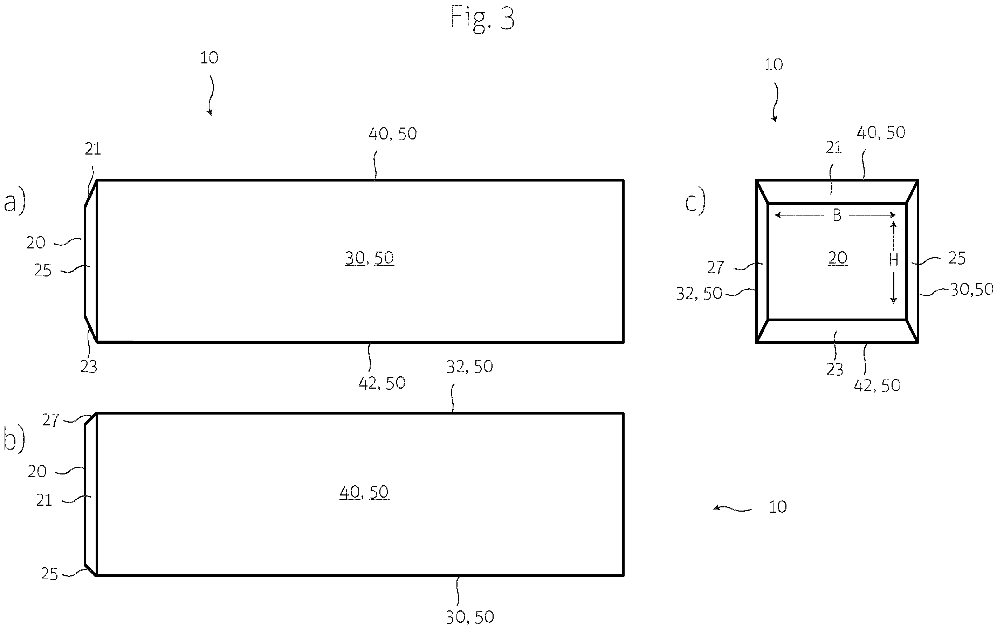

Bezugnehmend auf Fig. 3 sind, wie auch in Fig. 2, sämtliche Winkel zwischen Fasenflächen und Lichtaustrittsfläche und zwischen Fasenflächen und Mantelfläche stumpfe Winkel. Der Laserstab hat wiederum einen quadratischen Querschnitt und eine zentrierte, rechteckige Apertur.

Gegenüber dem Beispiel in Fig. 2 sind die Winkel zwischen der Lichtaustrittsfläche 20 und den Fasenflächen 21, 23, 25, 27 aber nicht identisch. Auch die Winkel zwischen den Fasenflächen 21, 23, 25, 27 und der Mantelfläche 50 sind nicht identisch. Die Fasen haben somit unterschiedliche Neigungswinkel.

Allgemein, ohne Beschränkung auf dieses Beispiel, kann eine oder können mehrere Fasen in unterschiedlichen Richtungen unterschiedliche Winkel aufweisen. Infolge der hier unterschiedlichen Winkel ist (gegenüber dem Lasermedium 10 der Fig. 2) die Anfasung des Lasermediums 10 in Richtung seiner Längsachse für die die Lichtaustrittsfläche begrenzenden Fasen 21, 23, 25, 27 gleich.

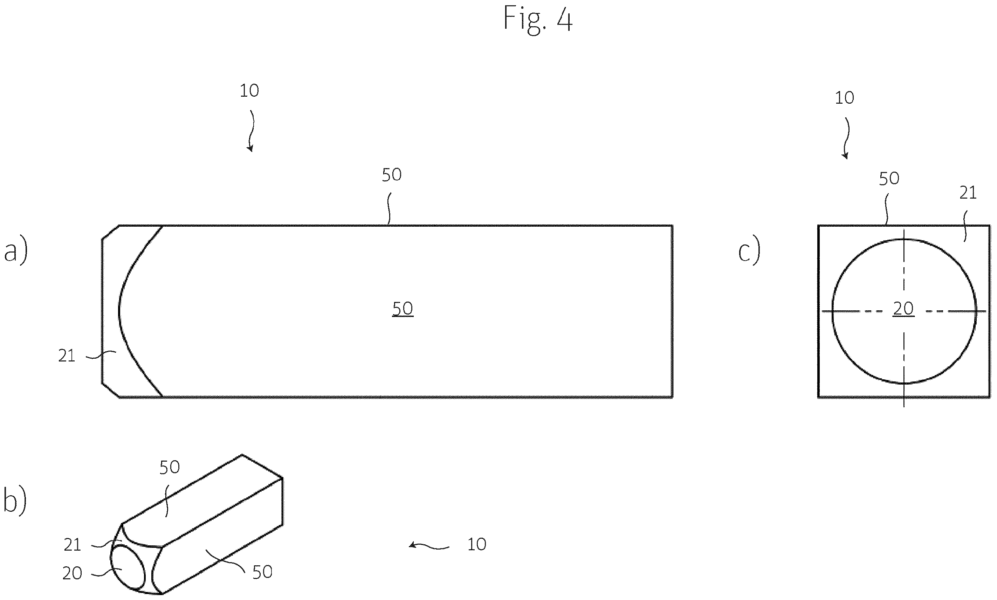

Bezugnehmend auf Fig. 4 bis 7 können Lasermedien mit nicht-rundem Querschnitt (z.B. mit rechteckigem oder quadratischem Querschnitt) z.B. eine runde oder elliptische Lichtaustrittsfläche 20 (Apertur) aufweisen. Die Fasenfläche kann dabei beispielsweise durch eine Teilfläche einer Kegeloberfläche beschrieben werden. Dies wird auch als kegelförmige Fase bezeichnet.

Fig. 4 zeigt ein als Laserstab ausgebildetes Lasermedium 10 in Seitenansicht (Fig. 4a), perspektivischer Ansicht (Fig. 4b) und in Vorderansicht auf die Lichtaustrittsfläche 20 (Fig. 4c).

Der Laserstab weist einen eckigen, hier quadratischen, Querschnitt und eine runde, hier kreisförmige Lichtaustrittsfläche 20 auf. Die Lichtaustrittsfläche 20 ist in diesem Beispiel zentriert bezüglich der Symmetrieachse des Stabs.

Die Fase 21 kann als kegelförmige Fase bezeichnet werden, in diesem Beispiel auch als konische Fase, denn die Fasenfläche kann durch eine Oberfläche auf einem geraden Kreiskegel beschrieben werden. Die Symmetrieachse dieses Kreiskegels ist hier identisch mit der Längsachse des Lasermediums 10. Mit anderen Worten ist die Symmetrieachse der Fase bzw. der Fasenfläche identisch mit der Symmetrieachse des Stabes.

Der Öffnungswinkel des Kegels beträgt hier 90 Grad. Dadurch entsteht eine Fase von 45 Grad. Allgemein kann der Kegel nahezu beliebige Öffnungswinkel aufweisen, welche erforderlich sind, um die gewünschten Fasenwinkel zu erhalten.

Im Beispiel der Fig. 4 ist beträgt der Durchmesser der Lichtaustrittsfläche etwa Apertur etwa 80 % der Seitenkante. Ohne Beschränkung auf dieses Beispiel kann die Lichtaustrittsfläche insbesondere zwischen 10 und 99 %, vorzugsweise zwischen 20 und 95 %, besonders bevorzugt zwischen 30 und 90 % einer Querschnittsfläche des Lasermediums 10 senkrecht zu dessen Längsachse aufweisen.

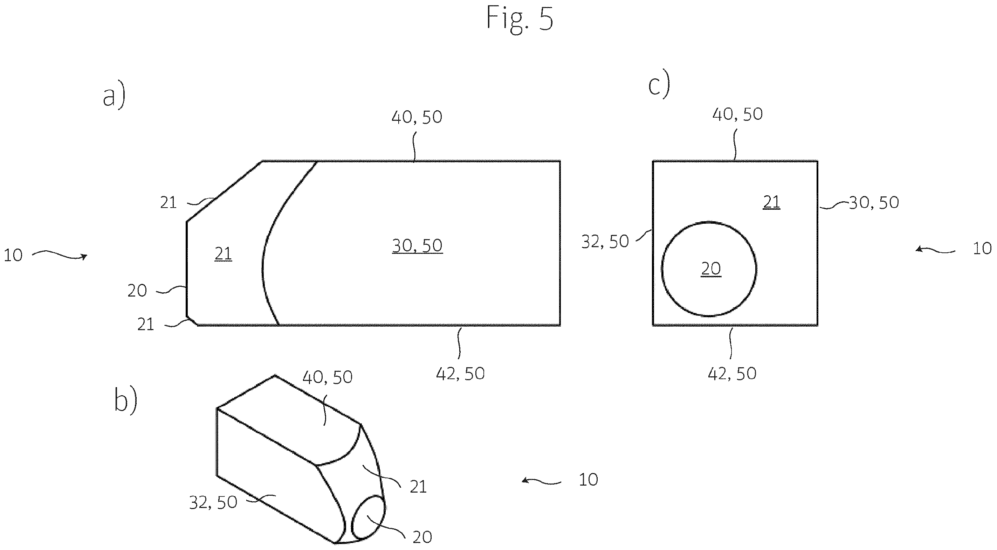

Bezugnehmend auf Fig. 5 kann die Symmetrieachse eines (Kreis-)Kegels, welcher die Fasenfläche 21 beschreibt, gegenüber der Symmetrieachse (Längsachse) des Stabes versetzt aber z.B. parallel dazu sein. Mit anderen Worten kann die Symmetrieachse einer Fase bezüglich der optischen Achse des Stabes in eine oder beide Richtungen quer zur Längsachse des Stabs gleich oder unterschiedlich weit verschoben sein, so dass die Lichtaustrittsfläche 20 (Apertur) nicht zentriert ist.

Diese Ausführungsform ist insbesondere dann von Interesse, wenn nicht von allen Seitenflächen 30, 40, 32, 42 gleichermaßen mit Pumplicht Energie in das Lasermedium gepumpt wird und sich der Laserstrahl aufgrund der Energiedichteverteilung nicht in der Mitte des Laserstabes ausbildet. Die asymmetrische Gestalt des in Fig. 5 gezeigten Lasermediums 10 kann demnach an eine asymmetrische Energiedichte im Lasermedium angepasst sein. Die Parameter für eine solche Anpassung können z.B. auch mittels Computersimulationen verfeinert werden.

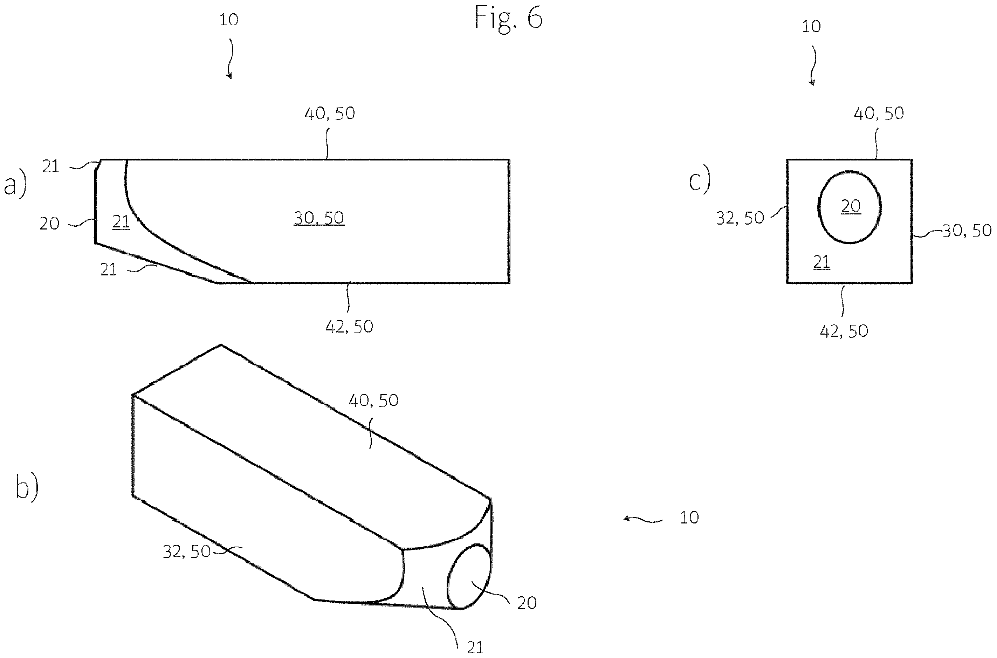

Bezugnehmend auf Fig. 6 kann die Symmetrieachse eines (Kreis-)Kegels, welcher die Fasenfläche 21 beschreibt, gegenüber der Längsachse des Lasermediums 10 schräg verlaufen. Entsprechend der Theorie der Kegelschnitte kann somit insbesondere eine elliptische Lichtaustrittsfläche 20 erhalten werden. Dies ist insbesondere dann der Fall, wenn die Lichtaustrittsfläche 20 senkrecht zur Längsachse des Stabs ausgerichtet ist.

Mit anderen Worten kann die Symmetrieachse der kegelförmigen Phase einen von Null verschiedenen Winkel zur optischen Achse des Lasermediums 10 haben.

Durch elliptische Aperturen (Lichtaustrittsflächen 20) können in besonders vorteilhafter Weise Brüche von Rotationssymmetrien aufgrund unsymmetrischer Geometrie des Stabes (z.B. rechteckig) oder aufgrund des Pumpens kompensiert werden.

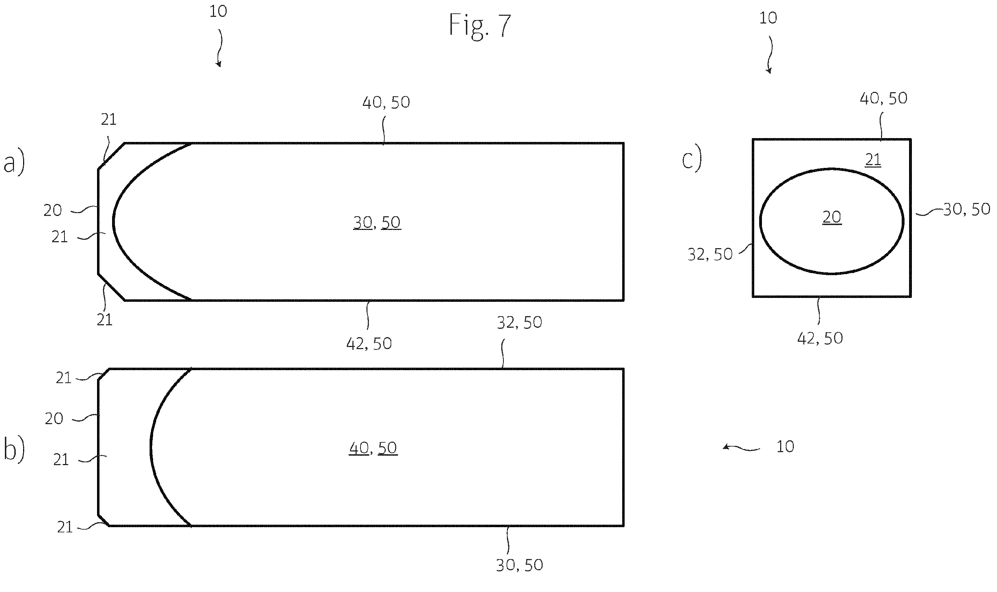

Fig. 7 zeigt ein als Laserstab ausgebildetes Lasermedium 10 in Seitenansicht (Fig. 7a), Aufsicht (Fig. 7b) und in Vorderansicht auf die Lichtaustrittsfläche 20 (Fig. 7c). Das Lasermedium weist eine elliptische Lichtaustrittsfläche 20 bei rundum gleichem Fasenwinkel (hier 45 Grad) auf.

Eine elliptische Apertur kann demnach auch dann erreicht werden, wenn die Fase stets den gleichen Winkel aufweist. Die Fasenfläche kann demnach auch zwei Symmetrieachsen aufweisen.

Ferner kann die Fase in unterschiedlichen Richtungen unterschiedliche Winkel aufweisen, insbesondere bei einem elliptischen Kegel, welcher die Fasenfläche beschreibt.

Der Kegelschnitt mit der ersten Stirnfläche des Lasermediums 10 ergibt dann eine Ellipse, welche der Lichtaustrittsfläche 20 entspricht. Dies gilt im Übrigen auch dann, wenn die Symmetrieachse des Kegels parallel zur optischen Achse des Stabes verläuft.

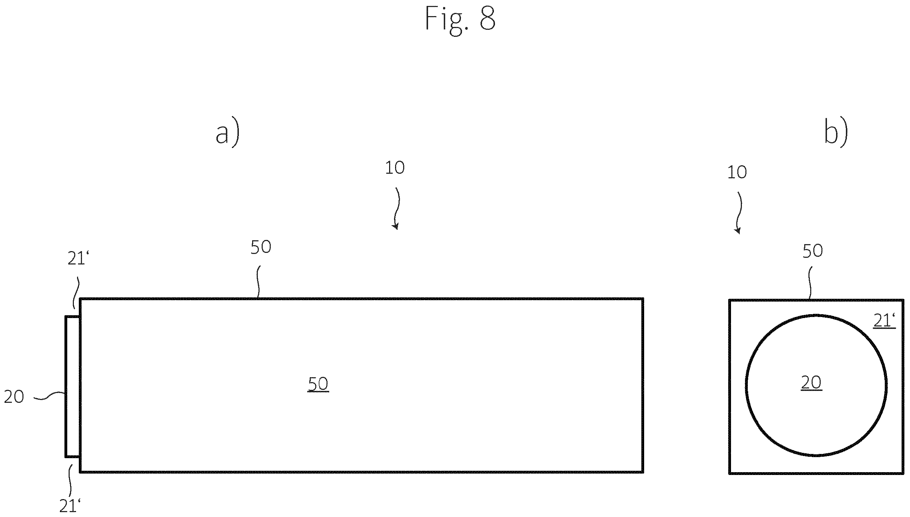

Bezugnehmend auf Fig. 8 bis 12 kann das Lasermedium 10 zumindest eine randseitige Rille 21', mit anderen Worten eine Stufe oder einen Falz aufweisen. Ebenso wie eine Fase kann die Rille 21' verhindern, dass sich im Bereich der Rille 21' Lasermoden parallel zur optischen Achse ausbilden. Die Rille 21' definiert demnach (ebenso wie eine Fase) die Begrenzung der Apertur, dient also insbesondere als Aperturblende.

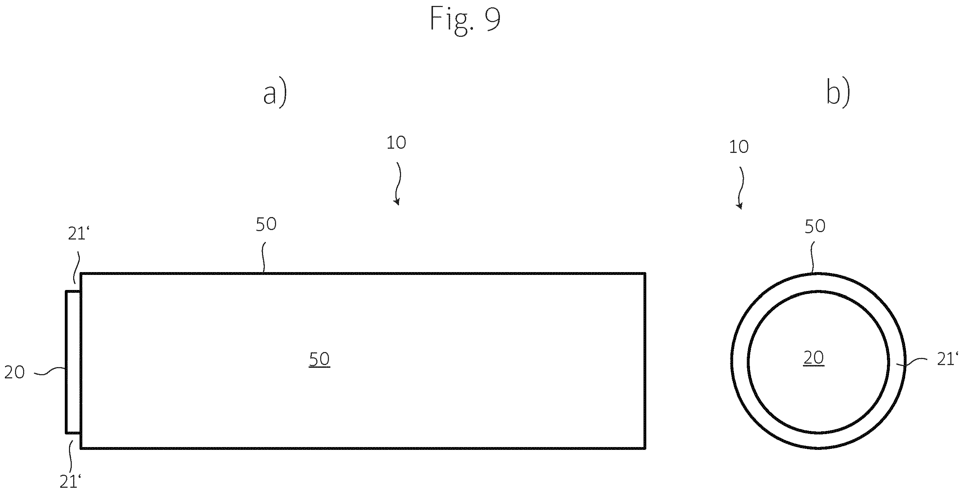

Die Fig. 8 bis 12 zeigen jeweils ein als Laserstab ausgebildetes Lasermedium 10 in Seitenansicht (Fig. 8a bis 12a) und in Vorderansicht auf die Lichtaustrittsfläche 20 (Fig. 8b bis 12b). Der in Fig. 8 gezeigte Laserstab hat eine quadratische Querschnittsfläche, während die in Fig. 9 bis 12 gezeigten Laserstäbe eine runde, genauer kreisförmige Querschnittsfläche aufweisen.

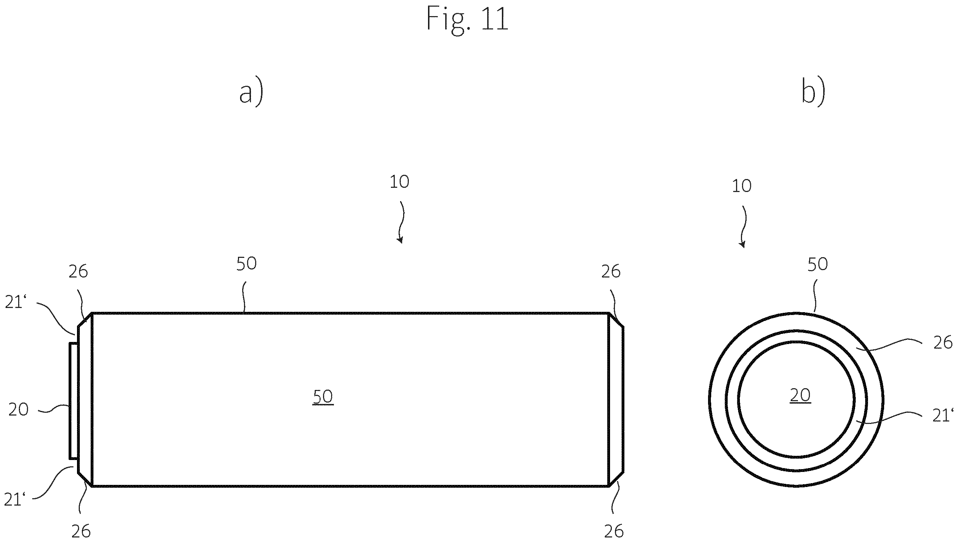

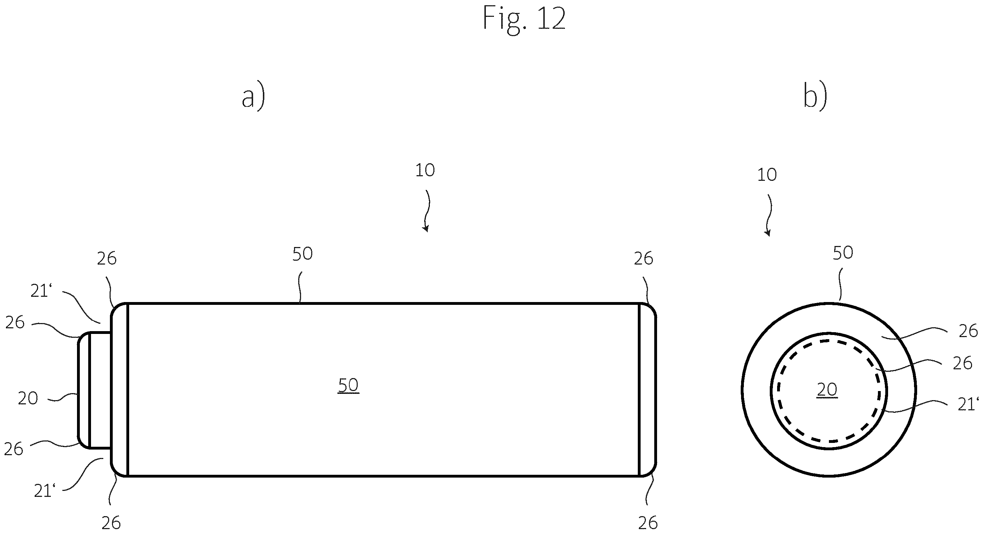

Bezugnehmend auf die Fig. 11 und 12 kann insbesondere bei einer Rille 21', die eine Begrenzung für eine Lichtaustrittsfläche 20 definiert, vorgesehen sein, dass eine oder mehrere Kanten der Rille angefast sind, d.h. mit einer Fase 26 versehen sind, wobei der Begriff der Fase auch eine Abrundung oder eine Hohlkehle etc. nicht ausschließen soll. Die Fase 26 kann insbesondere als eine Sicherheitsfase ausgebildet sein, d.h. die Bruchsicherheit des Laserstabs an der jeweiligen Kante erhöhen. Mit anderen Worten kann an einer Kante, insbesondere an einer Kante einer Rille 21', eine Fase 26 angebracht werden, um die Bruchsicherheit des Lasermediums zu erhöhen.

Bezugnehmend auf Fig. 11 braucht eine solche als Sicherheitsfase ausgebildete Fase 26 nicht definierend für die Begrenzung der Lichtaustrittsfläche zu sein. Allerdings kann eine Sicherheitsfase auch aperturwirksam sein: in der Fig. 12 ist die Begrenzung der Lichtaustrittsfläche 20 z.B. durch die gestrichelte Linie definiert. Darüber hinaus kann eine Sicherheitsfase auch auf das Modenprofil einwirken.

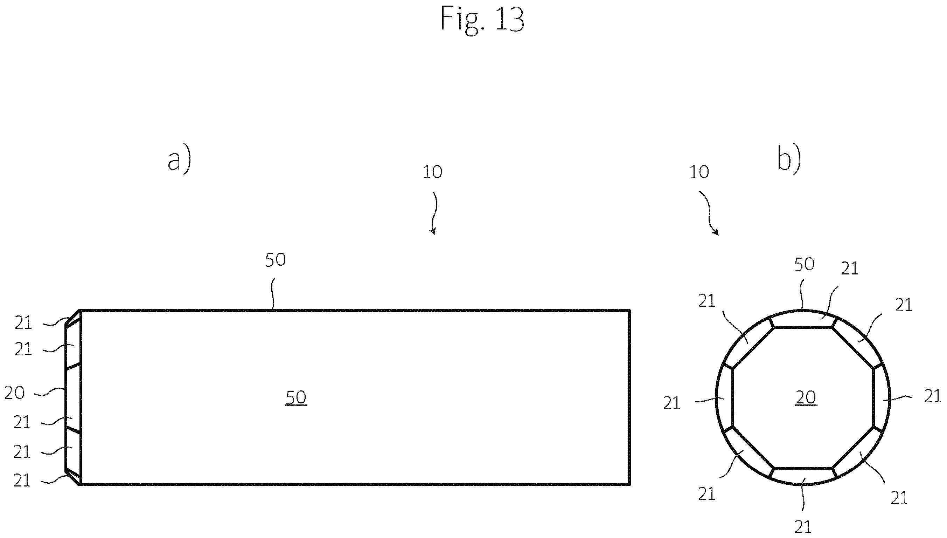

Das in Fig. 13 dargestellte Lasermedium 10 weist eine polygonale Lichtaustrittsfläche 20 auf, welche eine allseitige Begrenzung hat, die durch mehrere an die Lichtaustrittsfläche 20 angrenzende Fasen 21 definiert ist. Die allseitige Begrenzung, d.h. der geschlossene Rand der Lichtaustrittsfläche 20 umfasst mehrere gerade Begrenzungen, hier acht Randabschnitte, so dass die Lichtaustrittsfläche 20 als ein Oktagon ausgebildet ist.

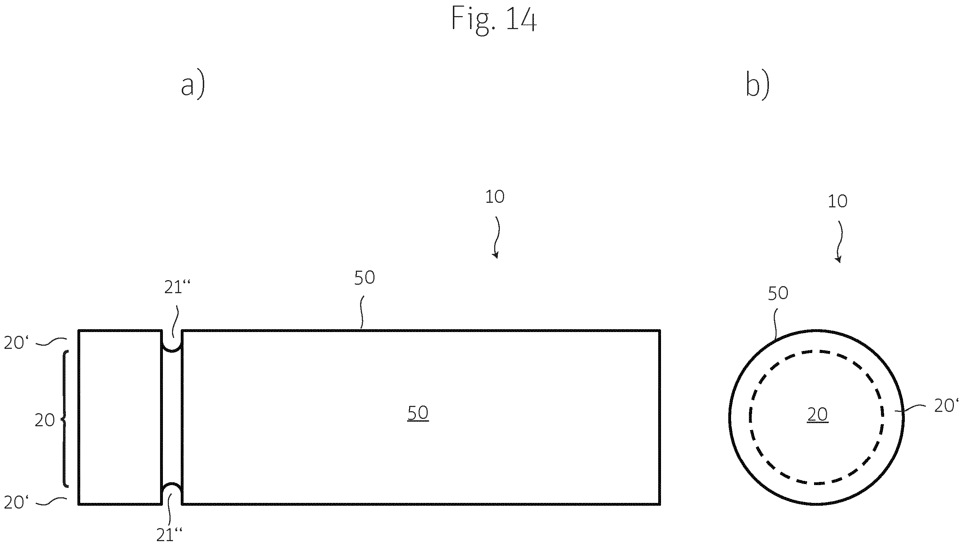

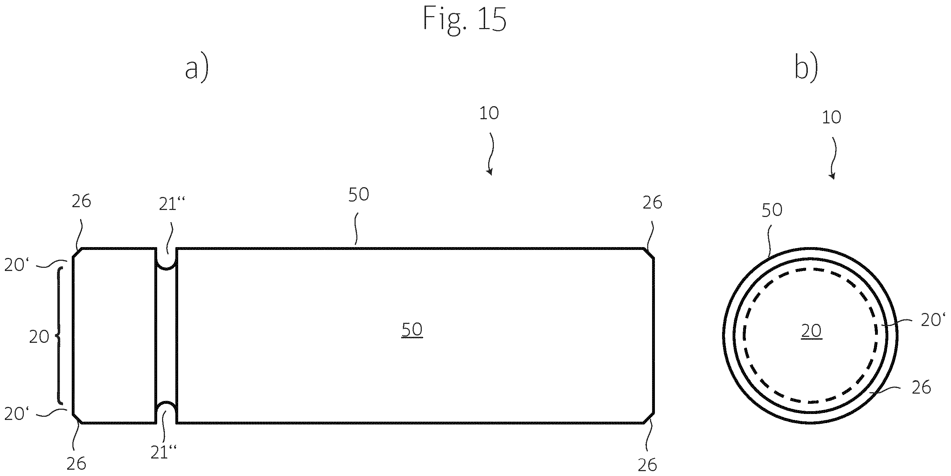

Bezugnehmend auf Fig. 14 und 15 kann die Begrenzung der Lichtaustrittsfläche 20 auch durch eine Rille 21" definiert sein, welche nicht an die Lichtaustrittsfläche angrenzt. Die Rille 21" kann in diesem Beispiel auch als eine umlaufende Nut bezeichnet werden. Die Rille 21" verläuft typischerweise tangential oder quer zur optischen Achse bzw. zur Längsachse des Lasermediums. Die Rille 21" ist in Bezug auf die Position entlang der optischen Achse derart angeordnet, dass die Ausbildung von Lasermoden im Bereich der Rille 21" parallel zur optischen Achse unterdrückt wird. Die Rille 21" ist demnach aperturwirksam, d.h. begrenzt die Apertur auf die Lichtaustrittsfläche 20.

In diesem Fall ist die Lichtaustrittsfläche 20 demnach nicht von einer Kante begrenzt. Vielmehr umfasst die Stirnseite des Lasermediums die Lichtaustrittsfläche 20 als eine Teilfläche. Mit anderen Worten geht die Lichtaustrittsfläche 20 eben in einen Totbereich 20' der Stirnseite des Lasermediums über.

Bezugnehmend auf Fig. 15 können darüber hinaus Fasen 26 vorgesehen sein, welche als Sicherheitsfasen ausgebildet sind. In diesem Fall befinden sich die Sicherheitsfasen jeweils im Totbereich 20' der Stirnseiten des Laserstabs und sind demnach nicht aperturwirksam.

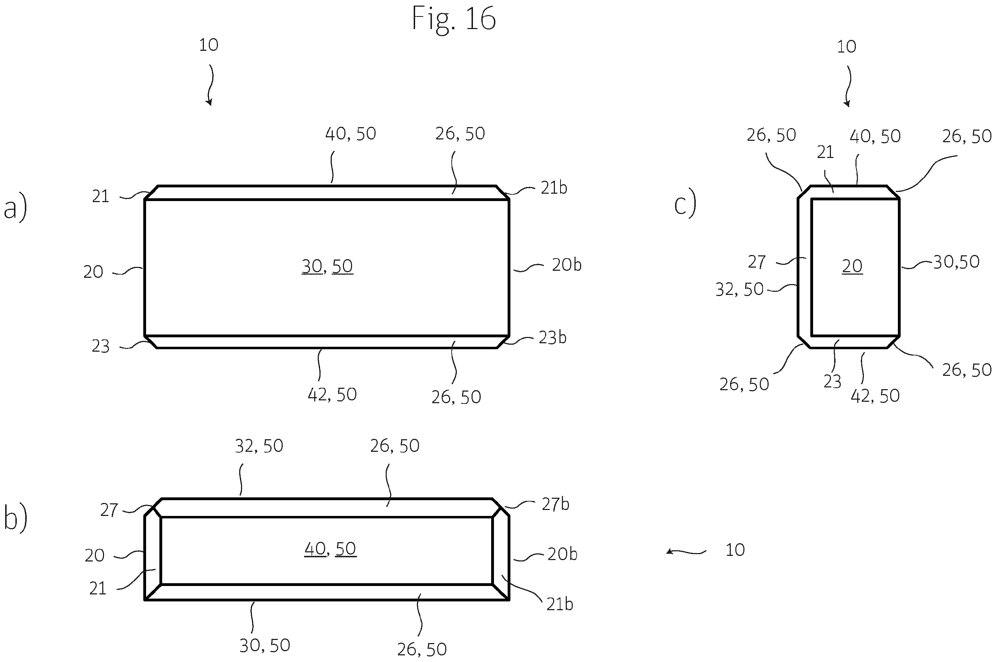

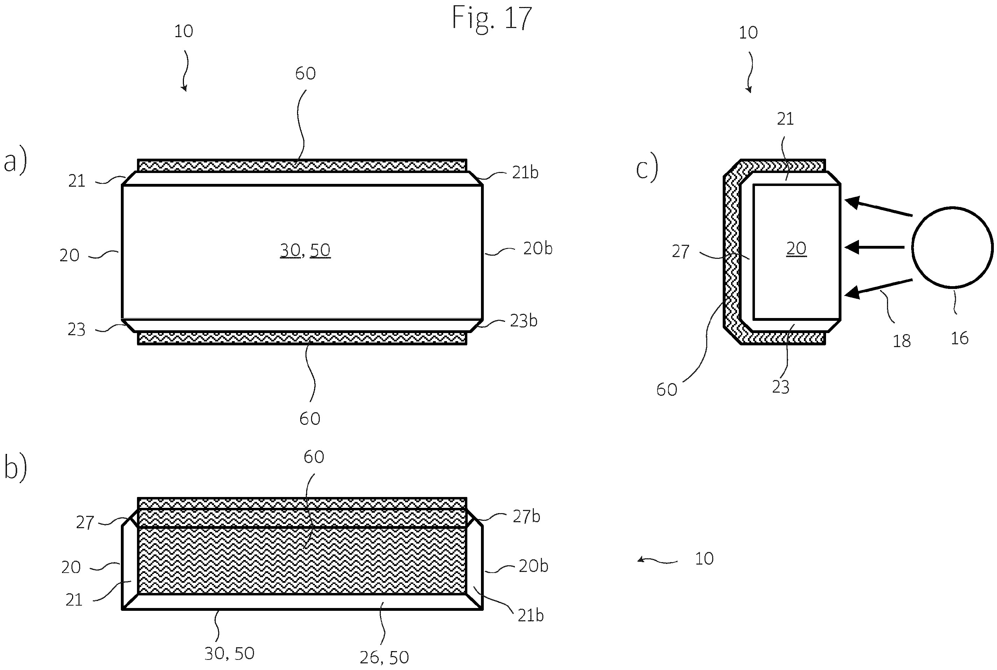

Die Fig. 16 und 17 zeigen jeweils ein als Laserstab ausgebildetes Lasermedium 10 in Seitenansicht (Fig. 16a und 17a), Aufsicht (Fig. 16b und 17b) und in Vorderansicht auf die Lichtaustrittsfläche 20 (Fig. 16c und 17c).

Bezugnehmend auf Fig. 16 kann eine Seitenfläche 30 über lediglich eine Kante in die Lichtaustrittsfläche 20 übergehen. Mit anderen Worten ist diese Kante zwischen der Seitenfläche 30 und der Lichtaustrittsfläche 20 nicht mit einer Fase oder einer Rille versehen.

Allgemein gesagt kann demnach vorgesehen sein, dass eine erste Begrenzung (hier der rechte gerade Randabschnitt) der Lichtaustrittsfläche 20 durch eine Seitenfläche 30 des Lasermediums definiert ist, d.h. nicht durch eine Fase oder Rille am oder im Lasermedium z.B. an oder in dieser Seitenfläche 30.

Vorzugsweise sind zugleich zumindest eine der oder die anderen Begrenzungen, welche zusammen mit der ersten Begrenzung eine allseitige Begrenzung der Lichtaustrittsfläche 20 definieren (hier der obere, linke und untere Randabschnitt) der Lichtaustrittsfläche 20 durch eine Fase (hier die Fasen 21, 23, 27) oder eine Rille definiert.

Die Seitenfläche 30 ist demnach gegenüber der gegenüberliegenden Seitenflächen 32 größer. Dies ist insbesondere zum Einbringen von Pumplicht von Vorteil. Die Seitenfläche 30 ist demnach vorzugsweise als eine Pumplichtfläche ausgebildet oder umfasst eine Pumplichtfläche.

Ferner können als Sicherheitsfasen ausgebildete Fasen 26 entlang der Längsachse des Lasermediums vorgesehen sein, um die Bruchsicherheit zu erhöhen. Die Mantelfläche des Lasermediums 10 umfasst demnach hier die als Pumplichtfläche dienende Seitenfläche 30, die anderen Seitenflächen 32, 40, 42 und die Fasen 26.

Außerdem kann vorgesehen sein, dass das Lasermedium spiegelsymmetrisch bezüglich einer Ebene senkrecht zur Längsachse ist. Insbesondere weist das dargestellte Lasermedium 10 auf beiden Stirnseiten jeweils Lichtaustrittsflächen 20 bzw. 20b auf, wobei jeweils aperturwirksame (d.h. die Begrenzung der Lichtaustrittsflächen definierende) Fasen 21, 23, 27 bzw. 21b, 23b, 27b vorgesehen sind.

Fig. 17 zeigt das Lasermedium 10 aus Fig. 16, wobei die Mantelfläche 50 zumindest ausgenommen der Pumplichtfläche mit einer Verspiegelung 60 verspiegelt ist. Demnach kann über die Seitenfläche 30 Pumplicht 18 aus einer Pumplichtquelle 16 in das Lasermedium 10 eingekoppelt werden. Wie vorstehend beschrieben wurde, kann durch die Verspiegelung die Effizienz des Pumpens erhöht werden.

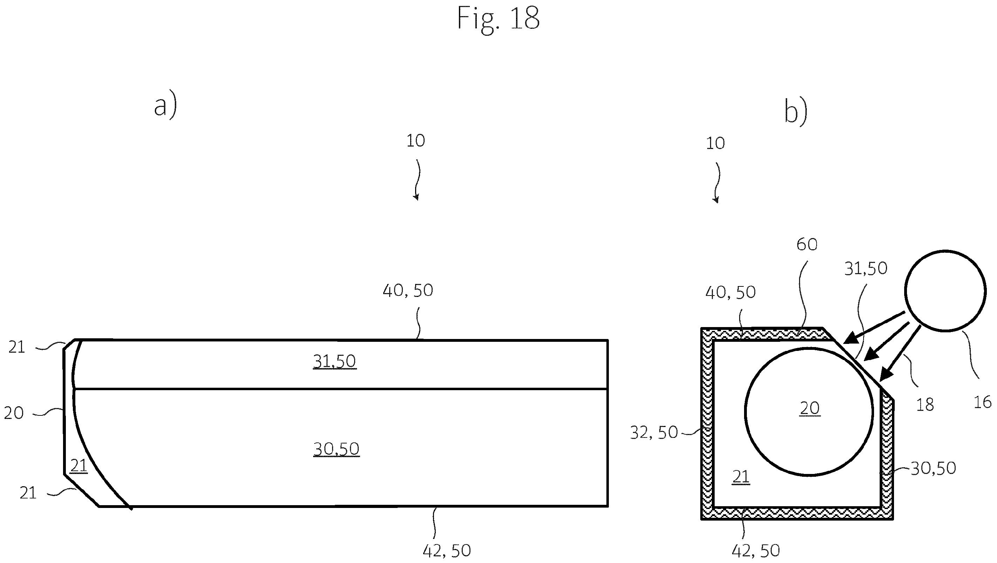

Die Fig. 18 zeigt ein als Laserstab ausgebildetes Lasermedium 10 in Seitenansicht (Fig. 18a) und in Vorderansicht auf die Lichtaustrittsfläche 20 (Fig. 18b), wobei das Lasermedium 10 eine kegelförmigen Fase 21 aufweist (ähnlich wie in Fig. 5). Die Mantelfläche 50 ist ausgenommen einer Pumplichtfläche mit einer Verspiegelung 60 verspiegelt, wobei die Verspiegelung 60 aus Gründen der Übersichtlichkeit in der Fig. 18a nicht dargestellt ist.

Hinsichtlich der Herstellung kann hierbei vorgesehen sein, dass zunächst eine Verspiegelung 60 auf zumindest einen Teil des Lasermediums 10, z.B. auf zumindest einen Teil der Mantelfläche 50, aufgebracht wird und danach die Pumplichtfläche erzeugt wird, indem ein Teil der Verspiegelung, insbesondere samt eines Teils des Lasermediums 10, wieder entfernt wird. Ferner kann vorgesehen sein, dass die zumindest eine Fase, hier die kegelförmige Fase 21 erzeugt wird, nachdem die Verspiegelung 60 aufgebraucht wurde.

Die Pumplichtfläche ist hier z.B. durch Anfasen einer Längskante des verspiegelten Lasermediums 10 erzeugt worden.

Das als Laserstab ausgebildete Lasermedium 10 weist hier demnach einen fünfeckigen Querschnitt und fünf Seitenflächen 30, 31, 32, 40, 42 auf, wobei die Seitenfläche 31 als Pumplichtfläche ausgebildet ist.

Die Lichtaustrittsfläche 20 kann, wie hier, lateral versetzt sein, derart, dass die Lichtaustrittsfläche 20 näher an der Pumplichtfläche angeordnet ist, als an einer oder den anderen Seitenflächen des Lasermediums 10. Dies kann vorteilhaft sein, da die Energiedichte in der Nähe der Pumplichtfläche typischerweise am höchsten ist.

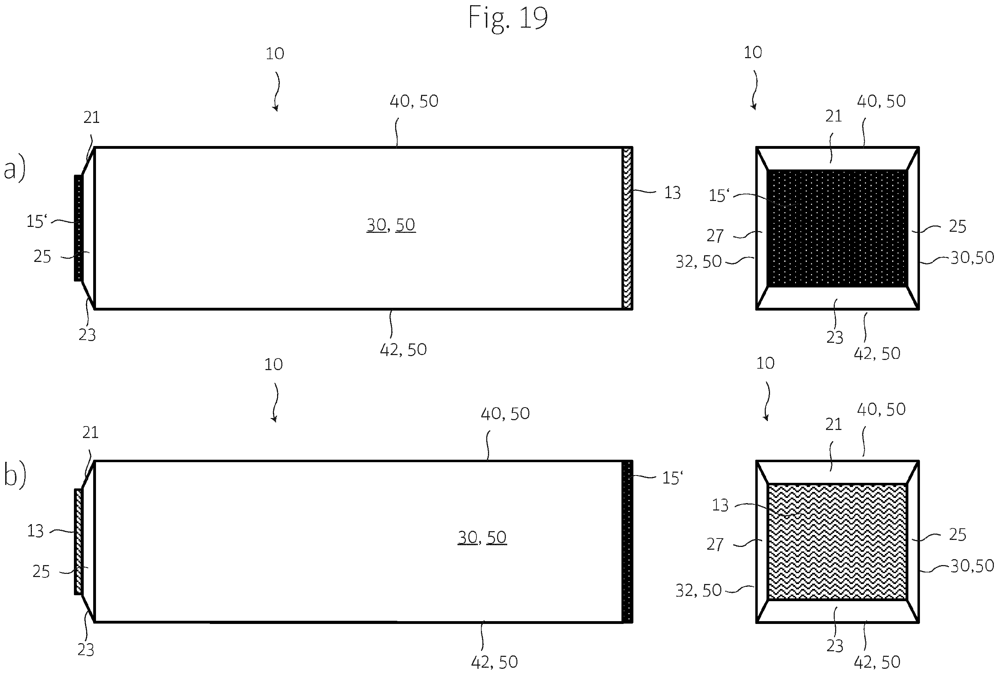

Fig. 19a und 19b zeigen jeweils ein als Laserstab ausgebildetes Lasermedien 10 in Seitenansicht (links) und in Vorderansicht auf die Lichtaustrittsfläche 20 (rechts).

Der in Fig. 19a gezeigte Laserstab weist eine reflektive Beschichtung 15' auf seiner angefasten Stirnseite auf, wobei die reflektive Beschichtung als eine teil- oder eine hochreflektive Beschichtung ausgebildet sein kann. Mit anderen Worten ist die angefaste Stirnseite des Laserstabs teilverspiegelt oder verspiegelt. Wenn es sich bei der Beschichtung 15' um eine teilreflektive Beschichtung handelt, so ist typischerweise die Stirnfläche auf der angefasten Stirnseite des Laserstabs als eine Lichtaustrittsfläche ausgebildet. Die der angefasten Stirnseite gegenüberliegende Stirnfläche des Laserstabs weist eine Antireflexbeschichtung 13 auf.

Umgekehrt weist der in Fig. 19b gezeigte Laserstab eine Antireflexbeschichtung 13 auf seiner angefasten Stirnseite und eine (teil)reflektive Beschichtung 15' auf der gegenüberliegenden Stirnfläche auf. Wenn es sich bei der Beschichtung 15' um eine teilreflektive Beschichtung handelt, umfasst die der angefasten Stirnseite gegenüberliegende Stirnfläche typischerweise eine Lichtaustrittsfläche (als Teilfläche).

Mit anderen Worten kann bei Laserstäben, die eine verspiegelte oder teilverspiegelte Stirnfläche (und eine unbeschichtete oder z.B. antireflexbeschichtete gegenüberliegende Stirnfläche) besitzen, die zumindest eine Fase (oder Rille) sowohl auf der einen als auch auf der anderen Stirnseite des Laserstabs sich befinden.

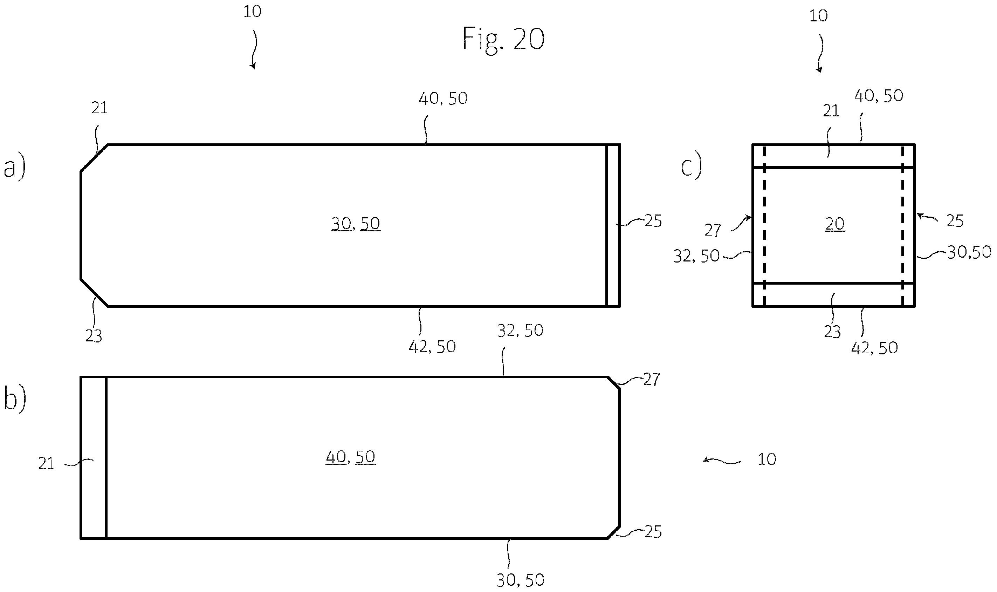

Bezugnehmend auf Fig. 20 ist es insbesondere auch möglich, Fasen (oder Rillen) auf beiden Stirnseiten zugleich anzubringen, derart, dass eine Begrenzung einer Lichtaustrittsfläche 20 durch die Fasen (oder Rillen) der auf beiden Stirnseiten angebrachten Fasen (oder Rillen) gemeinsam definiert ist. In dem gezeigten Beispiel befinden sich die Fasen 21, 23 auf der einen Stirnseite und die Fasen 25, 27 auf der anderen Stirnseite, wobei diese beiden Fasenpaare zueinander um 90 Grad gedreht angeordnet sind.

Die in den Ausführungsbeispielen gezeigten Laserstäbe weisen im Fall von zylinderförmigen Geometrien, wie etwa in den Figuren 9, 10, 11, 12 oder auch 13 gezeigt, einen Zylinderdurchmesser von 4 mm und eine Zylinderhöhe von 60 mm auf. Wie oben ausgeführt, ist es auch möglich, wesentlich kleinere zylinderförmige Laserstäbe zu erzeugen, welche etwa einen Zylinderdurchmesser von lediglich 1 mm oder sogar nur 0,7 mm und eine Zylinderhöhe von 10 mm oder sogar nur von 5 mm aufweisen.

Im Fall von quaderförmigen Laserstäben als Lasermedium, wie etwa in den Figuren 2, 3, 4 oder 5, 6, 7 oder 8 gezeigt, weisen diese eine Quaderlänge von 30 mm, eine Quaderbreite von 5 mm und eine Quaderhöhe von 5 mm auf. Auch hier sind, wie oben ausgeführt, wesentlich kleinere quaderförmige Laserstäbe möglich, welche etwa eine Quaderlänge von 4 mm, eine Quaderbreite von 2 mm und eine Quaderhöhe von 1 mm oder eine Quaderlänge von 3 mm, eine Quaderbreite von 0,7 mm und eine Quaderhöhe von 0,7 mm aufweisen. Das A/V-Verhältnis liegt dabei in einem Bereich zwischen 0,8, und 10, bevorzugt zwischen 1 und 8 und besonders bevorzugt zwischen 2 und 7.

Generell sind auch größere als die vorstehend beschriebenen Ausführungsformen möglich. So kann beispielsweise die Länge des Lasermediums bis 250 mm oder mehr betragen und kann diese Länge bei weiteren Ausführungsformen auch bis etwa 500 mm betragen.

## Patentansprüche

1. Lasermedium zur Erzeugung von Laserlicht, wobei das Lasermedium als ein Festkörper ausgebildet ist
und wobei das Lasermedium eine Lichtaustrittsfläche umfasst, durch welche das Laserlicht im Laserbetrieb aus dem Lasermedium austritt, wobei die Lichtaustrittsfläche eine Begrenzung aufweist, welche durch zumindest eine Fase oder Rille definiert ist
und wobei das Lasermedium ein Wirtsmaterial und darin eingebettetes laseraktives Material zur stimulierten Emission von Photonen umfasst, wobei das Wirtsmaterial aus der Gruppe der Phosphatgläser ausgewählt ist und
wobei das Lasermedium eine Querschnittsfläche senkrecht zu der Längsachse von mindestens 0,25 mm² und höchstens 1.000 mm² aufweist.

2. Lasermedium nach einem der vorstehenden Ansprüche, wobei die Lichtaustrittsfläche eine allseitige Begrenzung aufweist, welche durch die zumindest eine Fase definiert ist.

3. Lasermedium nach einem der vorstehenden Ansprüche, wobei das Lasermedium eine Längsachse aufweist, insbesondere ausgebildet ist als ein Laserstab mit einer die Lichtaustrittsfläche umfassenden ersten Stirnfläche, einer der ersten Stirnfläche gegenüberliegenden zweiten Stirnfläche und einer Mantelfläche, bevorzugt mit einer über einen Großteil der Länge des Lasermediums gleichbleibende, insbesondere polygonale, vorzugsweise quadratische, oder runde, vorzugsweise kreisförmige Querschnittsfläche senkrecht zu der Längsachse des Lasermediums.

4. Lasermedium nach einem der vorstehenden Ansprüche, wobei die Lichtaustrittsfläche gegenüber einer Querschnittsfläche senkrecht zu der Längsachse des Lasermediums kleiner ist, lateral versetzt ist, eine andere, insbesondere kleinere Anzahl an Ecken, insbesondere bei nicht-rundem Querschnitt aufweist, und/oder wobei die Lichtaustrittsfläche geometrisch nicht ähnlich ist gegenüber der oder einer Querschnittsfläche senkrecht zu der Längsachse des Lasermediums.

5. Lasermedium nach einem der vorstehenden Ansprüche, wobei die Lichtaustrittsfläche rund ist und eine Begrenzung aufweist, welche durch eine umlaufende Fase oder Rille definiert ist oder wobei die Lichtaustrittsfläche polygonal, insbesondere rechteckig, ist und Begrenzungen aufweist, welche durch mehrere, insbesondere drei oder vier Fasen oder Rillen definiert sind.

6. Lasermedium nach einem der vorstehenden Ansprüche, wobei die Lichtaustrittsfläche kreisförmig oder elliptisch ist und durch eine kegelförmige Fase begrenzt ist, insbesondere derart, dass die Fase beschrieben ist durch eine Oberfläche auf einem Kegel dessen Achse parallel oder schräg zur Längsachse des Lasermediums verläuft.

7. Lasermedium nach einem der vorstehenden Ansprüche, wobei die Lichtaustrittsfläche eben ist und insbesondere senkrecht zu der Längsachse des Lasermediums und/oder parallel zu der zweiten Stirnfläche des Laserstabs verläuft.

8. Lasermedium nach einem der vorstehenden Ansprüche, wobei
das Wirtsmaterial ausgewählt ist aus der Gruppe der Phosphatgläser, umfassend Phosphatgläser mit der Bezeichnung LG960, LG950 oder LG940.

9. Lasermedium nach einem der vorstehenden Ansprüche, wobei das laseraktive Material Ytterbium-Ionen, Erbium-Ionen, Neodym-Ionen, Praesodym-Ionen, Samarium-Ionen, Europium-Ionen, Gadolinium-Ionen, Terbium-Ionen, Dysprosium-Ionen, Holmium-Ionen, Thulium-Ionen, Cer-Ionen, Chrom-Ionen, Cobalt-Ionen Vanadium-Ionen, Nickel-Ionen, Molybdän-Ionen und/oder Titan-Ionen umfasst.

10. Lasermedium nach dem vorstehenden Anspruch, wobei die Konzentration der Ytterbium-Ionen im Bereich von 5 × 10²⁰ cm⁻³ bis 30 × 10²⁰ cm⁻³ liegt, die Konzentration der Erbium-Ionen im Bereich von 0,1 × 10²⁰ cm⁻³ bis 2 × 10²⁰ cm⁻³ liegt, die Konzentration der Chrom-Ionen im Bereich von 0 bis 0,2 × 10²⁰ cm⁻³ liegt und/oder die Konzentration der Neodym-Ionen im Bereich von 0,1 × 10²⁰ cm⁻³ bis 10 × 10²⁰ cm⁻³ liegt.

11. Lasermedium nach einem der vorstehenden Ansprüche umfassend eine teilreflektive Beschichtung, welche auf der Lichtaustrittsfläche, insbesondere auf der ersten Stirnfläche, aufgebracht ist und/oder umfassend eine hochreflektive Beschichtung welche auf der zweiten Stirnfläche, auf der Mantelfläche und/oder auf der zumindest einen Fase oder Rille aufgebracht ist.

12. Lasermedium nach einem der vorstehenden Ansprüche, wobei das Lasermedium eine Länge entlang der Längsachse von mindestens 1 Millimeter, vorzugsweise mindestens 5 Millimeter, und/oder höchstens 1.000 Millimeter, vorzugsweise höchstens 500 Millimeter, gemäß spezieller Ausführungsformen vorzugsweise höchstens 50 Millimeter und/oder eine Querschnittsfläche senkrecht zu der Längsachse von höchstens 100 mm² aufweist und/oder wobei das Verhältnis von Oberfläche zu Volumen des Lasermediums in einem Bereich zwischen 0,8 und 10, bevorzugt zwischen 1 und 8 und besonders bevorzugt zwischen 2 und 7 liegt.

13. Laservorrichtung mit einem Lasermedium nach einem der vorstehenden Ansprüche, einer Pumpquelle zum Einführen von Pumplicht in das Lasermedium und einem Resonator zur Mehrfachreflexion von Photonen, wobei der Resonator einen insbesondere durch eine teilreflektive Beschichtung gebildeten Auskoppelspiegel oder einen insbesondere durch eine hochreflektive Beschichtung gebildeten Endspiegel umfasst.

14. Verfahren zur Herstellung eines Lasermediums, insbesondere nach einem der Ansprüche 1 bis 12, mit den folgenden Schritten:
- Bereitstellen eines Lasermediums mit einer Lichtaustrittsfläche und zumindest einer Kante welche einen Übergang zwischen der Lichtaustrittsfläche und einer Mantelfläche des Lasermediums bildet, wobei das Lasermedium eine Querschnittsfläche senkrecht zu der Längsachse von mindestens 0,25 mm² und höchstens 1.000 mm² aufweist und wobei das Lasermedium ein Wirtsmaterial und darin eingebettetes laseraktives Material zur stimulierten Emission von Photonen umfasst, wobei das Wirtsmaterial aus der Gruppe der Phosphatgläser ausgewählt ist,
- Anfasen der zumindest einen Kante, insbesondere durch Abschleifen, Abpolieren und/oder Abfräsen der Kante, so dass die Lichtaustrittsfläche eine Begrenzung aufweist, welche durch zumindest eine Fase definiert ist.

## Claims

1. A laser medium for generating laser light, wherein the laser medium is in the form of a solid body,
and wherein the laser medium comprises a light exit surface through which the laser light exits the laser medium during laser operation, wherein the light exit surface has a boundary which is defined by at least one bevel or groove;
and wherein the laser medium comprises a host material and laser-active material embedded therein for stimulated emission of photons, wherein the host material is selected from the group of phosphate glasses; and
wherein the laser medium has a cross-sectional area perpendicular to the longitudinal axis of at least 0.25 mm² and at most 1,000 mm².

2. The laser medium according to any one of the preceding claims, wherein the light exit surface has a boundary on all of its sides, which is defined by the at least one bevel.

3. The laser medium according to any one of the preceding claims, wherein the laser medium has a longitudinal axis, in particular being in the form of a laser rod that has a first end face comprising the light exit surface, a second end face opposite the first end face, and a lateral surface, preferably having a cross-sectional area perpendicular to the longitudinal axis of the laser medium, which is consistent over a major part of the length of the laser medium, in particular a polygonal, preferably square, or a round, preferably circular cross-sectional area.

4. The laser medium according to any one of the preceding claims, wherein compared to a cross-sectional area perpendicular to the longitudinal axis of the laser medium, the light exit surface is smaller, is laterally offset, has a different, in particular smaller number of corners, in particular in the case of a non-round cross-section; and/or wherein the light exit surface is not geometrically similar to the or a cross-sectional area perpendicular to the longitudinal axis of the laser medium.

5. The laser medium according to any one of the preceding claims, wherein the light exit surface is round and has a boundary which is defined by a circumferential bevel or groove; or wherein the light exit surface is polygonal, in particular rectangular, and has boundaries which are defined by a plurality of bevels or grooves, in particular three or four.

6. The laser medium according to any one of the preceding claims, wherein the light exit surface is circular or elliptical and is delimited by a conical bevel, in particular such that the bevel is described by a surface on a cone whose axis runs parallel or obliquely to the longitudinal axis of the laser medium.

7. The laser medium according to any one of the preceding claims, wherein the light exit surface is flat and in particular extends perpendicular to the longitudinal axis of the laser medium and/or parallel to the second end face of the laser rod.

8. The laser medium according to any one of the preceding claims, wherein the host material is selected from the group of phosphate glasses, comprising phosphate glasses with the designation LG960, LG950 or LG940.

9. The laser medium according to any one of the preceding claims, wherein the laser-active material comprises ytterbium ions, erbium ions, neodymium ions, praseodymium ions, samarium ions, europium ions, gadolinium ions, terbium ions, dysprosium ions, holmium ions, thulium ions, cerium ions, chromium ions, cobalt ions, vanadium ions, nickel ions, molybdenum ions and/or titanium ions.

10. The laser medium according to the preceding claim, wherein the concentration of the ytterbium ions is in the range from 5 × 10²⁰ cm⁻³ to 30 × 10²⁰ cm⁻³, the concentration of the erbium ions is in the range from 0.1 × 10²⁰ cm⁻³ to 2 × 10²⁰ cm⁻³, the concentration of the chromium ions is in the range from 0 to 0.2 × 10²⁰ cm⁻³ and/or the concentration of the neodymium ions is in the range from 0.1 × 10²⁰ cm⁻³ to 10 × 10²⁰ cm⁻³.

11. The laser medium according to any one of the preceding claims, comprising a partially reflective coating which is applied on the light exit surface, in particular on the first end face; and/or comprising a highly reflective coating which is applied on the second end face, on the lateral surface and/or on the at least one bevel or groove.

12. The laser medium according to any one of the preceding claims, wherein the laser medium has a length along the longitudinal axis of at least 1 millimetre, preferably at least 5 millimetres, and/or of at most 1,000 millimetres, preferably at most 500 millimetres, according to special embodiments preferably at most 50 millimetres; and/or has a cross-sectional area perpendicular to the longitudinal axis of at most 100 mm²; and/or wherein the ratio of surface to volume of the laser medium is in a range between 0.8 and 10, preferably between 1 and 8, and most preferably between 2 and 7.

13. A laser device comprising a laser medium according to any one of the preceding claims, a pump source for introducing pump light into the laser medium, and a resonator for multiple reflection of photons, wherein the resonator comprises an output mirror that is in particular defined by a partially reflective coating, or an end mirror that is in particular defined by a highly reflective coating.

14. A method for producing a laser medium in particular according to any one of claims 1 to 12, comprising the steps of:
- providing a laser medium having a light exit surface and at least one edge which defines a transition between the light exit surface and a lateral surface of the laser medium, wherein the laser medium has a cross-sectional area perpendicular to the longitudinal axis of at least 0.25 mm² and at most 1,000 mm², and wherein the laser medium comprises a host material and laser-active material embedded therein for stimulated emission of photons, wherein the host material is selected from the group of phosphate glasses;
- chamfering the at least one edge, in particular by grinding, polishing and/or milling the edge, so that the light exit surface has a boundary which is defined by at least one bevel.

## Revendications

1. Milieu laser destiné à générer de la lumière laser, dans lequel le milieu laser étant réalisé comme un corps solide
et dans lequel le milieu laser comprend une surface de sortie de lumière par laquelle la lumière laser sort du milieu laser pendant le fonctionnement du laser, dans lequel la surface de sortie de lumière présente une délimitation, qui est définie par au moins un chanfrein ou une rainure
et dans lequel le milieu laser comprend un matériau hôte et un matériau actif laser incorporé dans celui-ci pour l'émission stimulée de photons, dans lequel le matériau hôte est choisi parmi le groupe des verres phosphatés et dans lequel le milieu laser présente une surface de section transversale perpendiculaire à l'axe longitudinal d'au moins 0,25 mm² et de 1 000 mm ² au maximum.

2. Milieu laser selon l'une quelconque des revendications précédentes, dans lequel la surface de sortie de lumière présente une délimitation omnilatérale, qui est définie par l'au moins un chanfrein.

3. Milieu laser selon l'une quelconque des revendications précédentes, dans lequel le milieu laser présente un axe longitudinal, est réalisé en particulier en tant qu'une barre laser avec une première surface frontale comprenant la surface de sortie de lumière, une deuxième surface frontale opposée à la première surface frontale et une surface de gaine, de manière préférée avec une surface de section transversale constante sur une grande partie de la longueur du milieu laser, en particulier polygonale, de préférence carrée, ou ronde, de préférence circulaire de manière perpendiculaire à l'axe longitudinal du milieu laser.

4. Milieu laser selon l'une quelconque des revendications précédentes, dans lequel la surface de sortie de lumière est plus petite par rapport à une surface de section transversale de manière perpendiculaire à l'axe longitudinal du milieu laser, est décalée latéralement, présente un autre nombre, en particulier plus petit, de coins, en particulier en cas de section transversale non ronde, et/ou dans lequel la surface de sortie de lumière n'est pas similaire géométriquement par rapport à la ou à une surface de section transversale de manière perpendiculaire à l'axe longitudinal du milieu laser.

5. Milieu laser selon l'une quelconque des revendications précédentes, dans lequel la surface de sortie de lumière est ronde et présente une délimitation, qui est définie par un chanfrein ou une rainure périphérique ou dans lequel la surface de sortie de lumière est polygonale, en particulier rectangulaire, et présente des délimitations, qui sont définies par plusieurs, en particulier trois ou quatre chanfreins ou rainures.

6. Milieu laser selon l'une quelconque des revendications précédentes, dans lequel la surface de sortie de lumière est circulaire ou elliptique et est délimitée par un chanfrein en forme de cône, en particulier de telle manière que le chanfrein est décrit par une surface sur un cône dont l'axe s'étend de manière parallèle ou oblique par rapport à l'axe longitudinal du milieu laser.

7. Milieu laser selon l'une quelconque des revendications précédentes, dans lequel la surface de sortie de lumière est plane et s'étend en particulier de manière perpendiculaire à l'axe longitudinal du milieu laser et/ou de manière parallèle à la deuxième surface frontale de la barre laser.

8. Milieu laser selon l'une quelconque des revendications précédentes,
dans lequel
le matériau hôte est choisi parmi le groupe des verres phosphatés comprenant des verres phosphatés avec la désignation LG960, LG950 ou LG940.

9. Milieu laser selon l'une quelconque des revendications précédentes, dans lequel le matériau actif laser comprend des ions ytterbium, des ions erbium, des ions néodyme, des ions praésodyme, des ions samarium, des ions europium, des ions gadolinium, des ions terbium, des ions dysprosium, des ions holmium, des ions thulium, des ions cérium, des ions chrome, des ions cobalt, des ions vanadium, des ions nickel, des ions molybdène et/ou des ions titane.

10. Milieu laser selon la revendication précédente, dans lequel la concentration des ions ytterbium se situe dans la plage de 5 × 10²⁰ cm ⁻³ à 30 × 10²⁰ cm ⁻³, la concentration des ions erbium se situe dans la plage de 0,1 × 10²⁰ cm ⁻³ à 2 × 10²⁰ cm ⁻³, la concentration des ions chrome se situe dans la plage de 0 à 0,2 × 10²⁰ cm ⁻³ et/ou la concentration des ions néodyme se situe dans la plage de 0,1 × 10²⁰ cm - ³ à 10 × 10²⁰ cm ^{- 3}.

11. Milieu laser selon l'une quelconque des revendications précédentes comprenant un revêtement en partie réfléchissant, qui est appliqué sur la surface de sortie de lumière, en particulier sur la première surface frontale, et/ou comprenant un revêtement hautement réfléchissant, qui est appliqué sur la deuxième surface frontale, sur la surface de gaine et/ou sur l'au moins un chanfrein ou l'au moins une rainure.

12. Milieu laser selon l'une quelconque des revendications précédentes, dans lequel le milieu laser présente une longueur le long de l'axe longitudinal d'au moins 1 millimètre, de préférence d'au moins 5 millimètres, et/ou de 1 000 millimètres au maximum, de préférence de 500 millimètres au maximum, selon des modes de réalisation spécifiques, de préférence de 50 millimètres au maximum et/ou une surface de section transversale de manière perpendiculaire à l'axe longitudinal de 100 mm² au maximum et/ou dans lequel le rapport entre la surface et le volume du milieu laser se situe dans une plage comprise entre 0,8 et 10, de manière préférée entre 1 et 8 et de manière particulièrement préférée entre 2 et 7.

13. Dispositif laser avec un milieu laser selon l'une quelconque des revendications précédentes, une source de pompage destinée à introduire de la lumière de pompage dans le milieu laser et un résonateur pour la réflexion multiple de photons, dans lequel le résonateur comprend un miroir de découplage formé en particulier par un revêtement en partie réfléchissant ou un miroir d'extrémité formé en particulier par un revêtement hautement réfléchissant.

14. Procédé de fabrication d'un milieu laser, en particulier selon l'une quelconque des revendications 1 à 12, avec les étapes suivantes :
- de mise à disposition d'un milieu laser avec une surface de sortie de lumière et au moins un bord, qui forme une transition entre la surface de sortie de lumière et une surface de gaine du milieu laser, dans lequel le milieu laser présente une surface de section transversale de manière perpendiculaire à l'axe longitudinal d'au moins 0,25 mm² et de 1 000 mm² au maximum et dans lequel le milieu laser comprend un matériau hôte et un matériau actif laser incorporé dans celui-ci pour l'émission stimulée de photons, dans lequel le matériau hôte est choisi parmi le groupe des verres phosphatés,
- de chanfreinage de l'au moins un bord, notamment par meulage, polissage et/ou fraisage du bord, de telle sorte que la surface de sortie de lumière présente une délimitation, qui est définie par au moins un chanfrein.
